# EUROPEAN PATENT APPLICATION

(11) **EP 4 459 082 A1**
(43) Date of publication of application: **06.11.2024**
(21) Application number: 24169855.4
(22) Date of filing: 12.04.2024
(51) Int. Cl.: E05B 15/00, E05B 47/00

(54) **ELECTRONIC CONTROL COMPOUND LOCK**

(30) Priority: 17.04.2023 US 202363496423 P
(71) Applicant: Sinox Company Ltd., New Taipei City (TW)
(72) Inventor: WENG, Chia-Wei, New Taipei City (TW); HUANG, Yueh-Cheng, New Taipei City (TW); LYU, Hao-Jhong, New Taipei City (TW); LIEN, Chi-Liang, New Taipei City (TW)
(74) Representative: Cabinet Chaillot

(57) **Abstract**

An electronic control compound lock can be unlocked both electronically and mechanically. The lock comprises two lock cores (10, 20) and at least one movable or rotatable latch tongue (30). The two lock cores (10, 20) are respectively unlocked mechanically or electronically through electronically signals. In the first configuration of the lock, the lock cores (10, 20) are driven with each other and one of them unlocks the latch tongue (30). In the second configuration, the lock cores (10, 20) connect an output unit (60), which unlocks the latch tongue (30). In the third configuration, the two lock cores (10, 20) respectively unlock the latch tongue (30). In either configuration, when one of the lock cores (10, 20) is unlocked, the latch tongue (30) can be unlocked. Furthermore, a plurality locks are unlocked simultaneously through electronic signals, being convenient to use.

## Description

### 1. Field of the Invention

The present invention relates to a compound lock which can be unlocked by both electronic control and mechanical control, and can be used in padlocks, bicycle locks, luggage locks for suitcases, backpacks, handbags, briefcases, and so on, numerical smart home locks, such as door locks, cabinet locks, safe locks for steel safe, drawer locks, and medicine cabinet, etc.

### 2. Description of Related Art

A conventional lock can only be unlocked by one way. For example, a normal key lock can only be unlocked with a key, a combination lock can only be unlocked by entering a correct code, an electronic lock can only be unlocked by electronic signals, etc. But restriction to only one unlocking way is inconvenient. For example, if the electronic lock malfunctions, it is possible that the lock cannot be unlocked. Or, for a normal key lock, it cannot be unlocked if the key is lost. Apart from that, in some circumstances, a lock that can only be unlocked by one way is rather inconvenient. For example, when each of several cabinets has its own key, unlocking the cabinets one by one with their own keys is quite troublesome.

In addition, conventional locks lack security. For example, a normal lock uses an elastic element pushing a latch tongue to secure a to-be-secured element. But for this kind of structure, by striking the lock several times from different angles, a right striking angle may be obtained and the latch tongue will compress the elastic element to move away and be detached from the to-be-secured element. So, for an experienced thief, it is not difficult to pick the lock.

To sum up, the conventional locks still needs to be improved.

In view of shortcomings and lacks of prior arts, the present invention provides electronic control compound locks, which can be unlocked by both electronic control and mechanical control, therefore convenient to use.

An electronic control compound lock related to the present invention comprises a first lock core, a second lock core, and a first latch tongue. The first lock core has a first output portion, which can be driven when unlocking the first lock core. The second lock core has a second output portion, which can be driven when unlocking the second lock core. One of the first lock core and the second lock core is unlocked through electronic signals, and the other one of the first lock core and the second lock core is unlocked mechanically. The first latch tongue is movable or rotatable. The first output portion and the second output portion are driven together. The first output portion is driven with the first latch tongue. When one of the first lock core and the second lock core is unlocked, the first output portion unlocks the first latch tongue.

The present invention further provides an electronic control compound lock comprising a first lock core, a second lock core, an output unit, and a first latch tongue. The first lock core has a first output portion, which can be driven when unlocking the first lock core. The second lock core has a second output portion, which can be driven when unlocking the second lock core. One of the first lock core and the second lock core is unlocked through electronic signals, and the other one of the first lock core and the second lock core is unlocked mechanically. The output unit is connected to the first output portion and the second output portion. The first latch tongue is movable or rotatable and is connected to the output unit. When one of the first lock core and the second lock core is unlocked, the first output portion and the second output portion unlock the first latch tongue through the output unit.

The present invention further provides an electronic control compound lock comprising a first lock core, a second lock core, and a first latch tongue. The first lock core has a first output portion, which can be driven when unlocking the first lock core. The second lock core has a second output portion, which can be driven when unlocking the second lock core. One of the first lock core and the second lock core is unlocked through electronic signals, the other one of the first lock core and the second lock core is unlocked mechanically. The first latch tongue is movable or rotatable. The first output portion and the second output portion are respectively driven with the first latch tongue. When one of the first lock core and the second lock core is unlocked, the first output portion and the second output portion unlock the first latch tongue.

The electronic control compound lock has two lock cores. There are three configurations in accordance with the present invention that the two lock cores can unlock a latch tongue. In the first configuration, the two lock cores are driven with each other, and one of them unlocks the latch tongue. In the second configuration, the two lock cores are both connected to the output unit, which unlocks the latch tongue. In the third configuration, either of the two lock cores can unlock the latch tongue. In either configuration, unlocking one of the two lock cores will unlock the latch tongue, thereby being convenient to use. Especially, because one of the two lock cores is unlocked through electronic signals, when using a plurality of said electronic control compound locks, the electronic control compound locks can be unlocked at the same time through electronic signals, further to facilitate flexibility in use.

In the drawings:
Fig. 1 is a perspective view of a first embodiment of an electronic control compound lock in accordance with the present invention;
Figs. 2 and 3 are exploded views of components of the first embodiment of the electronic control compound lock in accordance with the present invention;
Figs. 4 to 6 are plan views of the first embodiment of the electronic control compound lock in accordance with the present invention, while locking the electronic control compound lock;
Fig. 7 is a plan view of a first way to unlock the first embodiment of the electronic control compound lock in accordance with the present invention;
Fig. 8 is a plan view of a second way to unlock the first embodiment of the electronic control compound lock in accordance with the present invention;
Fig. 9 is a perspective view of a second embodiment of the electronic control compound lock in accordance with the present invention;
Fig. 10 is a perspective view of partial components of the second embodiment of the electronic control compound lock in accordance with the present invention;
Fig. 11 is an exploded view of components of the second embodiment of the electronic control compound lock in accordance with the present invention;
Fig. 12 is a plan view of the second embodiment of the electronic control compound lock in accordance with the present invention, while locking the electronic control compound lock;
Fig. 13 is a plan view of a first way to unlock the second embodiment of the electronic control compound lock in accordance with the present invention;
Fig. 14 is a plan view of a second way to unlock the second embodiment of the electronic control compound lock in accordance with the present invention;
Fig. 15 is an exploded view of components of a third embodiment of the electronic control compound lock in accordance with the present invention;
Fig. 16 is a plan view of the third embodiment of the electronic control compound lock in accordance with the present invention, while locking the electronic control compound lock;
Fig. 17 is a plan view of a first way to unlock the third embodiment of the electronic control compound lock in accordance with the present invention;
Fig. 18 is a plan view of a second way to unlock the third embodiment of the electronic control compound lock in accordance with the present invention;
Fig. 19 is a perspective view of a fourth embodiment of the electronic control compound lock in accordance with the present invention;
Figs. 20 to 22 are perspective views of partial components of the fourth embodiment of the electronic control compound lock in accordance with the present invention;
Figs. 23 and 24 are exploded views of components of the fourth embodiment of the electronic control compound lock in accordance with the present invention;
Fig. 25 is a perspective view of the fourth embodiment of the electronic control compound lock in accordance with the present invention, while locking the electronic control compound lock;
Figs. 26 to 29 are perspective views of a first way to unlock the fourth embodiment of the electronic control compound lock in accordance with the present invention;
Figs. 30 to 33 are perspective views of a second way to unlock the fourth embodiment of the electronic control compound lock in accordance with the present invention;
Figs. 34 to 36 are plan views of the second way to unlock the fourth embodiment of the electronic control compound lock in accordance with the present invention;
Fig. 37 is a perspective view of the fourth embodiment of the electronic control compound lock in accordance with the present invention, while locking the electronic control compound lock;
Fig. 38 is a perspective view of the first way to unlock the fourth embodiment of the electronic control compound lock in accordance with the present invention;
Fig. 39 is a perspective view of the second way to unlock the fourth embodiment of the electronic control compound lock in accordance with the present invention;
Fig. 40 is a perspective view of partial components of a fifth embodiment of the electronic control compound lock in accordance with the present invention;
Figs. 41 and 42 are exploded views of components of the fifth embodiment of the electronic control compound lock in accordance with the present invention;
Figs. 43 and 44 are perspective views of partial components of the fifth embodiment of the electronic control compound lock in accordance with the present invention;
Figs. 45 and 46 are plan views of a first way to unlock the fifth embodiment of the electronic control compound lock in accordance with the present invention;
Figs. 47 and 48 are plan views of a second way to unlock the fifth embodiment of the electronic control compound lock in accordance with the present invention;
Fig. 49 is a perspective view of a sixth embodiment of the electronic control compound lock in accordance with the present invention;
Figs. 50 and 51 are perspective views of a first way to unlock the sixth embodiment of the electronic control compound lock in accordance with the present invention; and
Figs. 52 and 53 are perspective views of a second way to unlock the sixth embodiment of the electronic control compound lock in accordance with the present invention.

With reference to drawings and preferable embodiments in accordance to the present invention, descriptions below are to elaborate technical means to achieve intended purpose of the present invention.

An electronic control compound lock in accordance with the present invention can be used in padlocks, bicycle locks, luggage locks, numerical smart home locks, such as door locks, cabinet locks, safe locks for steel safe, drawer locks, and medicine cabinets, etc., and is not limited to the above.

The electronic control compound lock has two lock cores, which are a first lock core and a second lock core, and at least one latch tongue (a first latch tongue at least). In preferable embodiments, the electronic control compound lock has two latch tongues, which are the first latch tongue and a second latch tongue. Based on how the lock cores and the latch tongues are driven with one another, there are three configurations. In the first configuration, the two lock cores are driven with each other, and one of them unlocks the latch tongues. In the second configuration, the two lock cores are connected to an output unit, which unlocks the latch tongue. In the third configuration, either of the two lock cores can unlock the latch tongue independently.

There are six embodiments of the electronic control compound lock described below to elaborate the three configurations. The first configuration corresponds to the first and the second embodiments. The second configuration corresponds to the third and the fourth embodiments. The third configuration corresponds to the fifth and the sixth embodiments. However, each configuration is not limited to the corresponding embodiment(s), and each embodiment may be applied to configurations other than the corresponding one.

In either configuration, the latch tongue can be unlocked as long as one of the two lock cores is unlocked, thereby being convenient to use. Besides, one of the two lock cores (the first lock core and the second lock core) is unlocked through electronic signals, and the other one is unlocked mechanically. In other words, in the following six embodiments, positions of the lock core unlocked through electronic signals and the lock core unlocked mechanically can be exchanged.

Unlocking through electronic signals can be wire-connected control or wirelessly-connected control, preferably through a smartphone application. Unlocking can also be controlled through a central controlling system, when several electronic control compound locks are applied at different lockers or in different smart house devices. Besides, when applied on bicycles, the electronic control compound lock can also work with Controller Area Network Bus (CAN bus), and Bluetooth Low Energy (BLE), etc. Additionally, the lock core that is unlocked through electronic signals can be rotated by a motor but is not limited to that.

Unlocking mechanically means unlocking physically. For example, a combination lock, or any lock that is unlocked through an unlocking tool, is unlocked mechanically and physically. The unlocking tool is not limited to a conventional key, but it can be any tool or device that is not a key.

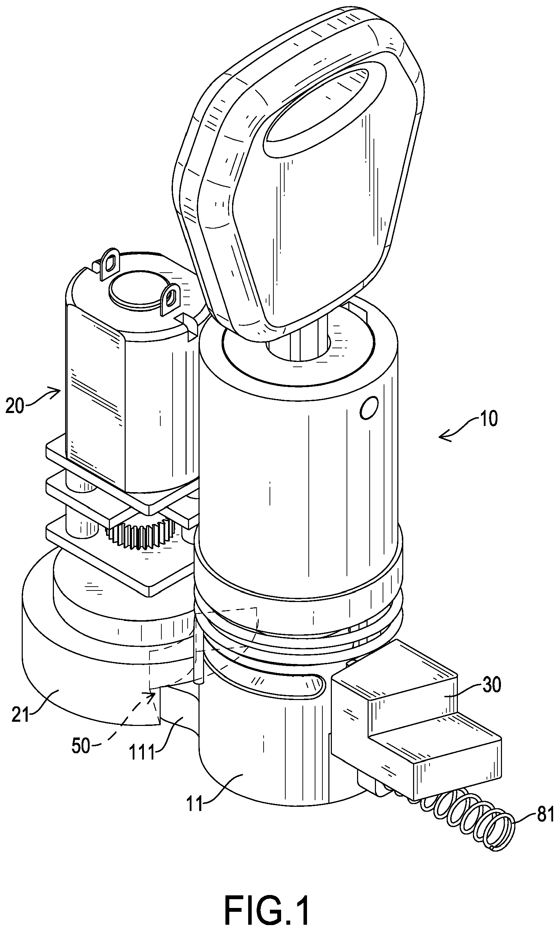

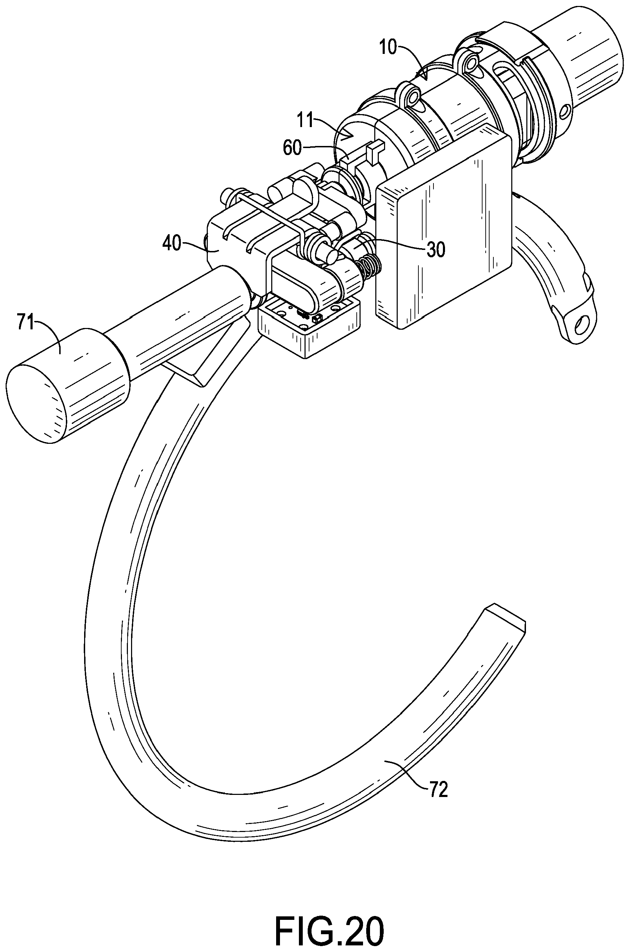

With reference to Figs. 1 and 20, the first lock core 10 has a first output portion 11. When unlocked, the first lock core 10 can drive the first output portion 11, such as moving or rotating the first output portion 11.

The second lock core 20 has a second output portion 21. When unlocked, the second lock core 20 can drive the second output portion 21, such as moving or rotating the second output portion 21.

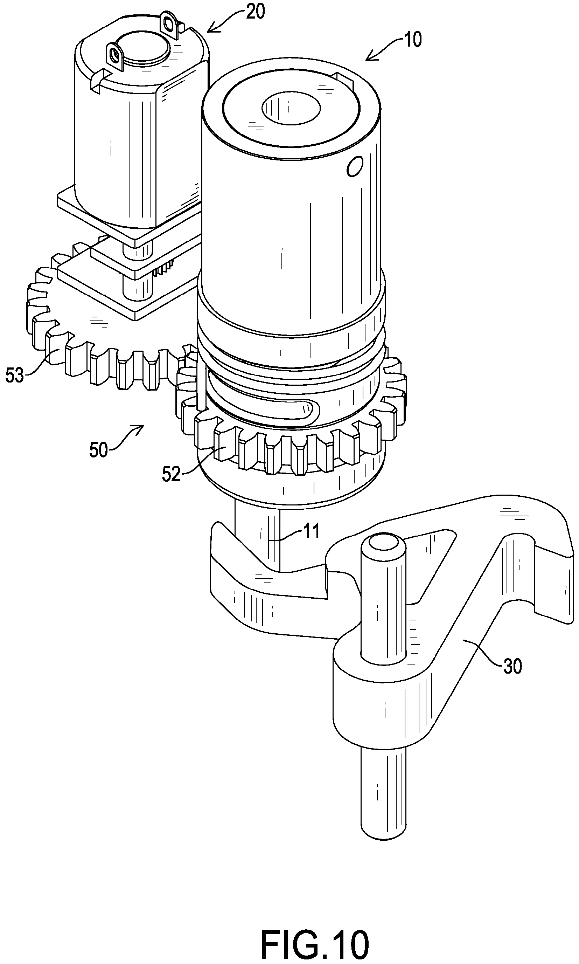

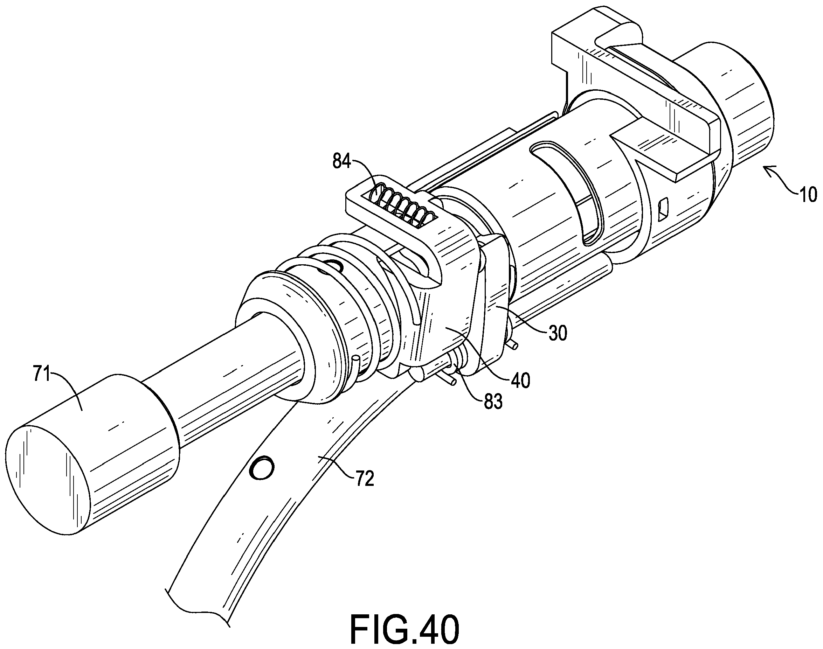

The latch tongues (a first latch tongue 30 and a second latch tongue 40) are movable or rotatable depending on mechanisms and purposes. With reference to Figs. 1, 10 and 15, in the first to third, and sixth embodiments, there is only one latch tongue, i.e., the first latch tongue 30. In the first embodiment, the latch tongue is movable. In the second, the third, and the sixth embodiments, the latch tongue is rotatable. With reference to Figs. 20 and 40, in the fourth and fifth embodiments, there are two latch tongues, i.e., the first latch tongue 30 and the second latch tongue 40. In the fourth embodiment, both of the latch tongues 30, 40 are rotatable. In the fifth embodiment, the first latch tongue 30 is movable and the second latch tongue 40 is rotatable. However, in every embodiment, the amount of the latch tongue can be altered, and the latch tongue being movable or rotatable can be altered.

Among the three configurations of the present invention, no matter in which configuration, when one of the first lock core 10 and the second lock core 20 is unlocked, the latch tongues (the first latch tongue 30 and the second latch tongue 40) will be unlocked. Unlocking the latch tongue includes two conditions, one is that the latch tongue is in an unlockable state, and the other one is that the latch tongue is in an actually-unlocked state. The unlockable state of the latch tongue means the lock cores make the latch tongue unlock-able, yet still needs further cooperating with another unit, such as an elastic unit, to unlock the latch tongue, as in the first embodiment. The actually-unlocked state means that after one of the first lock core 10 and the second lock core 20 is unlocked, the output portion corresponding to the unlocked lock core will drive the latch tongue moving or rotating to unlock the latch tongue, as in the second to sixth embodiments.

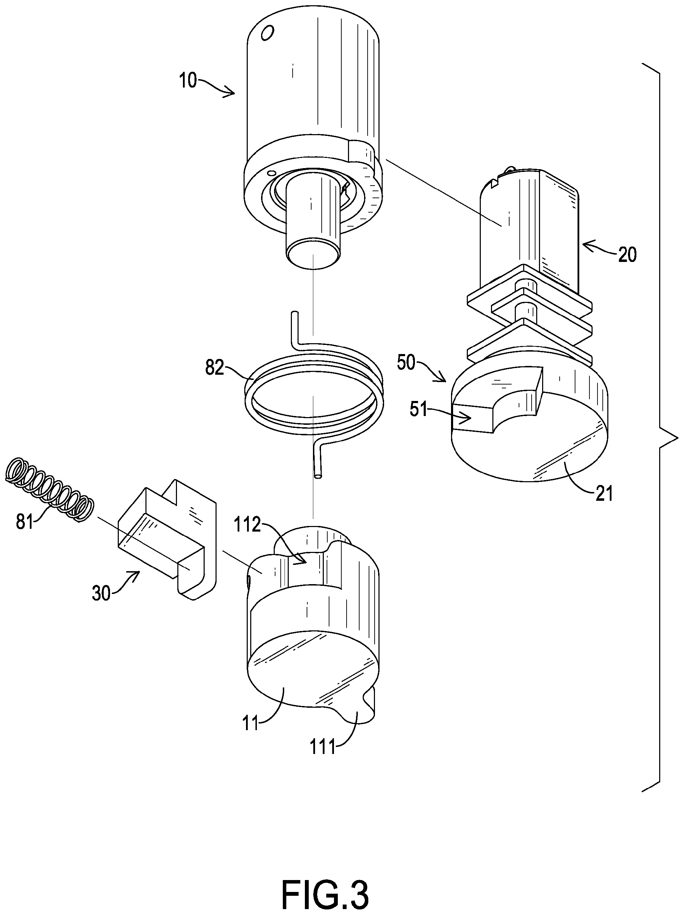

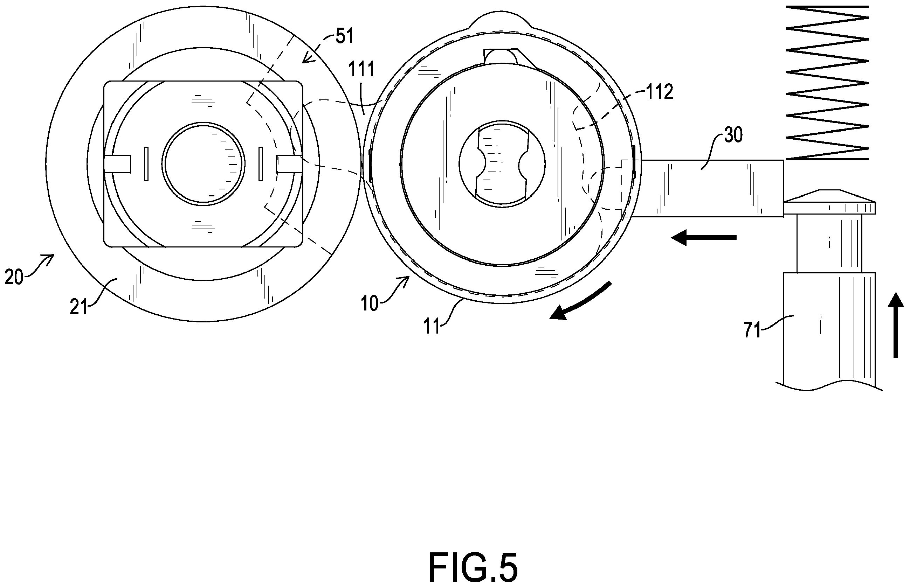

With reference to Figs. 1 to 14, in the first and second embodiments, and in the first configuration of the present invention, the first output portion 11 of the first lock core 10 and the second output portion 21 of the second lock core 20 are driven together, and the first output portion 11 of the first lock core 10 is driven with the first latch tongue 30. When one of the first lock core 10 and the second lock core 20 is unlocked, the first output portion 11 unlocks the first latch tongue 30.

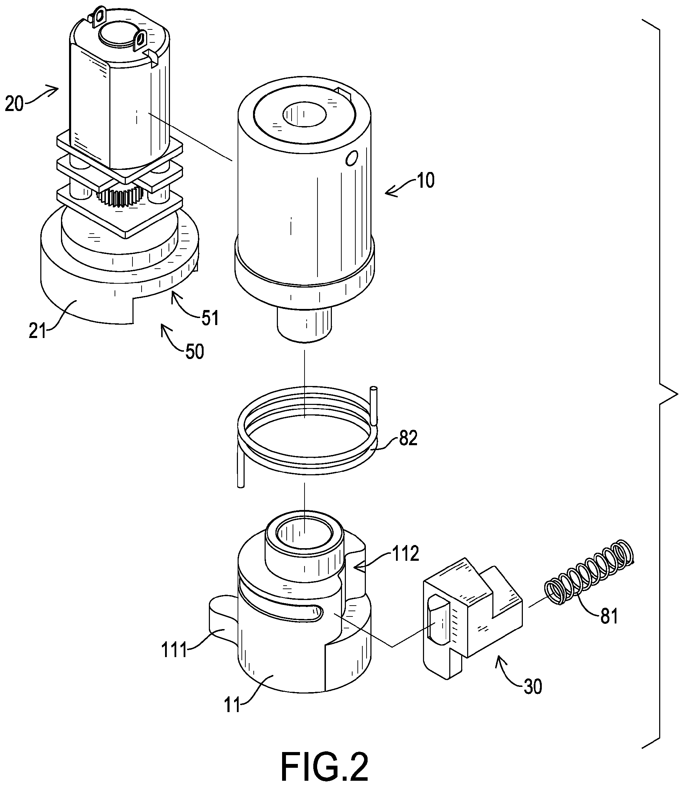

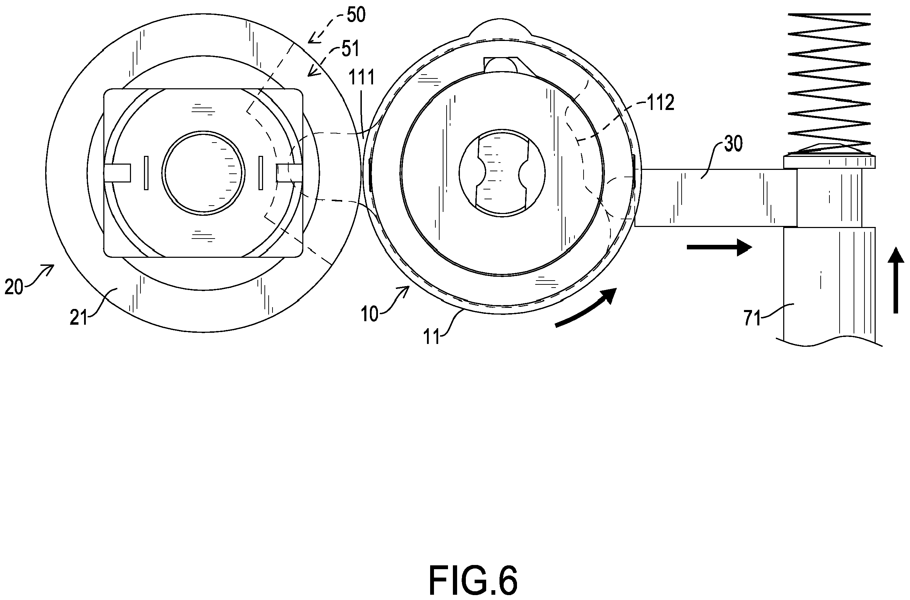

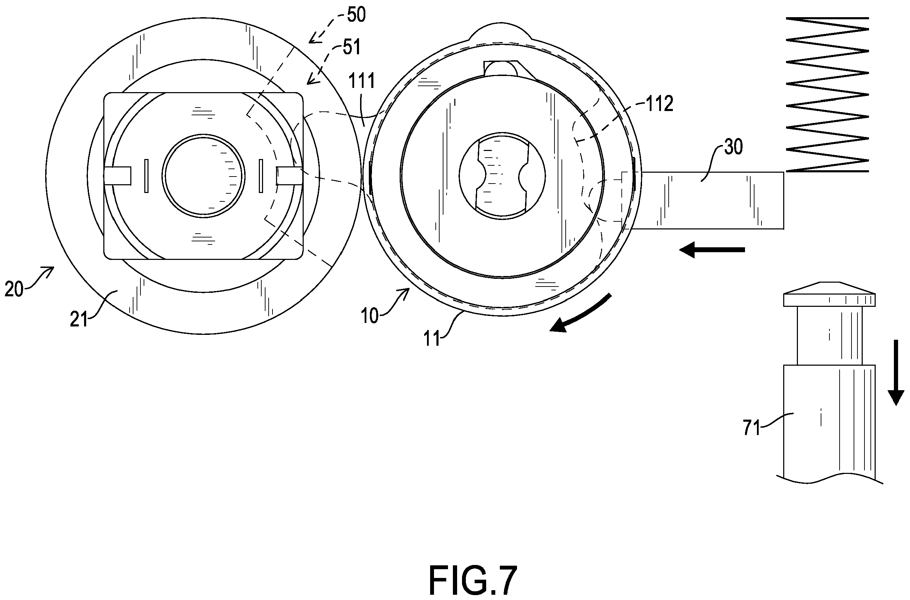

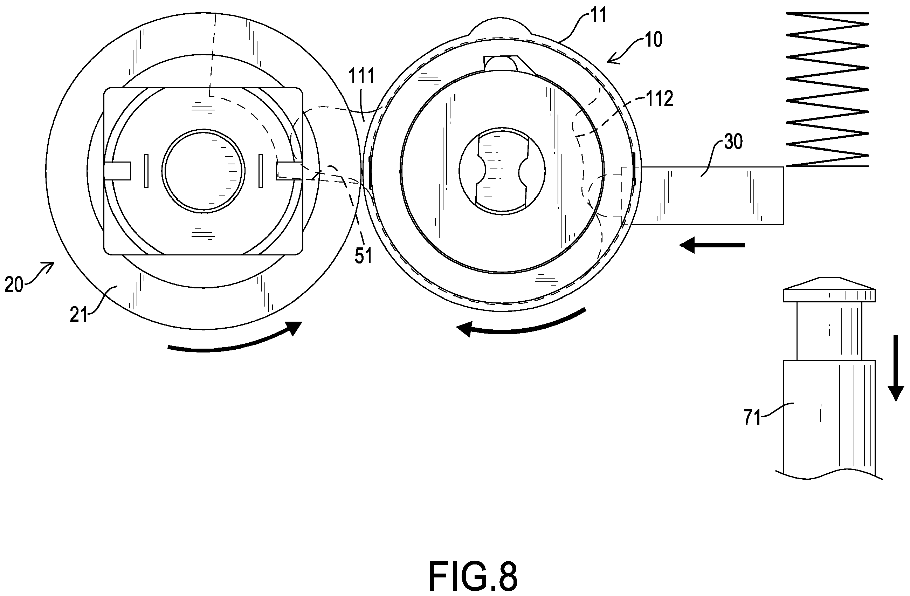

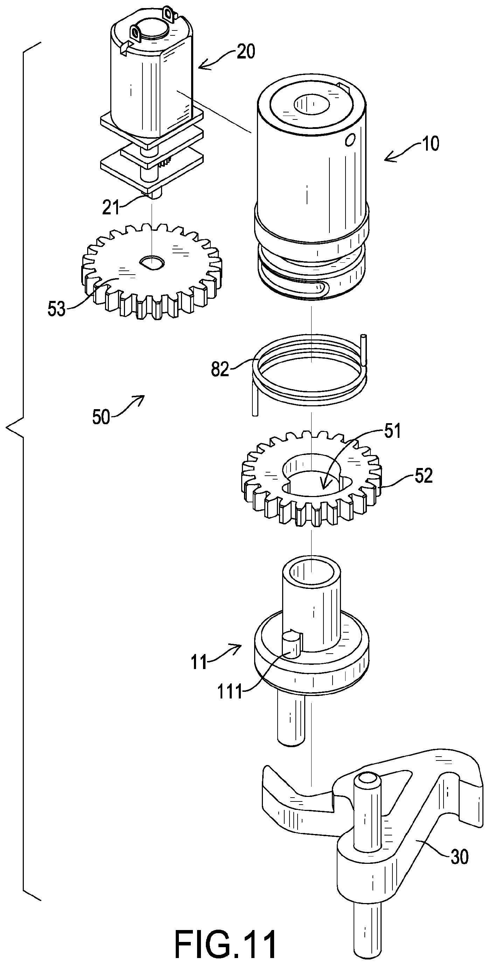

Preferably, the first configuration further comprises a clutch structure 50 mounted between the first output portion 11 and the second output portion 21, as shown in Figs. 2 and 11. When the first lock core 10 is unlocked and drives the first output portion 11 to unlock the first latch tongue 30, the clutch structure 50 prevents the first output portion 11 from driving the second output portion 21. So, the second lock core 20 is not affected, as shown in Figs. 6 and 7. When the second lock core 20 is unlocked and drives the second output portion 21 to unlock the first latch tongue 30, the second output portion 21 drives the first output portion 11, so that the first output portion 11 unlocks the first latch tongue 30, as shown in Figs. 6 and 8. But the first configuration is not limited to that, which means there can be no clutch structure 50 between the first output portion 11 and the second output portion 21. It is still acceptable that the driven first output portion 11 drives the second output portion 21.

Preferably, the clutch structure 50 has an elongated recess 51 as shown in Figs. 2 and 11. When being driven, the first output portion 11 moves in the elongated recess 51. When being driven, the second output portion 21 drives the first output portion 11 through a wall of the elongated recess 51. In embodiments that the output portions 11, 21 are movable, the elongated recess 51 is a linear recess. In embodiments that the output portions 11, 21 are rotatable, the elongated recess 51 is a curved recess. However, the clutch structure 50 is not limited to that and can be in different shapes.

With reference to Figs. 1 to 8, in the first embodiment, the first lock core 10 and the second lock core 20 align, and the first output portion 11 and the second output portion 21 are adjacent and are laterally arranged. The first output portion 11 and the second output portion 21 are rotatable. The first output portion 11 has a transmitting portion 111 radially protruding from it. The elongated recess 51 of the clutch structure 50 is formed on the second output portion 21. Therefore, when the first output portion 11 is rotated, the transmitting portion 111 moves in the elongated recess 51 on the second output portion 21 and does not interfere with the second output portion 21's movement, as shown in Figs. 6 and 7. When being rotated, the second output portion 21 pushes the transmitting portion 111 through a wall at one end of the elongated recess 51, thereby rotating the first output portion 11, as shown in Figs. 6 and 8.

Besides, in the first embodiment, about a way in which the first output portion 11 and the first latch tongue 30 are driven with each other, preferably the first output portion 11 has a latch tongue recess 112 depressed radially on a surface of the first output portion 11. The first latch tongue 30 selectively moves into the latch tongue recess 112. When the first lock core 10 is locked, the first output portion 11 is rotated to a position that is not the latch tongue recess 112 or to a position at a shallow part of the latch tongue recess 112, which corresponds to the first latch tongue 30, as shown in Fig. 6. So, the first latch tongue 30 cannot move a required distance to be unlocked toward the first output portion 11. Alternatively, when the first lock core 10 is unlocked, the first output portion 11 is rotated to the latch tongue recess 112 or to a position at a deeper part of the latch tongue recess 112, which corresponds to the first latch tongue 30, as shown in Fig. 7. Therefore, the first latch tongue 30 is able to move the required distance to be unlocked toward the first output portion 11, so the first latch tongue 30 is in the unlockable state.

Preferably, the electronic control compound lock further comprises an unlocking elastic unit 81, which facilitates the first latch tongue 30 to move or rotate toward the first output portion 11, as shown in Fig. 1. In the first embodiment, the unlocking elastic unit 81 constantly pushes the first lock core 10 toward the first output portion 11. Therefore, when the first output portion 11 is rotated toward the position at the deeper part of the latch tongue recess 112, which corresponds to the first latch tongue 30, the first latch tongue 30 is pushed into the deeper part of the latch tongue recess 112 to be actually unlocked, as shown in Figs. 6 and 7.

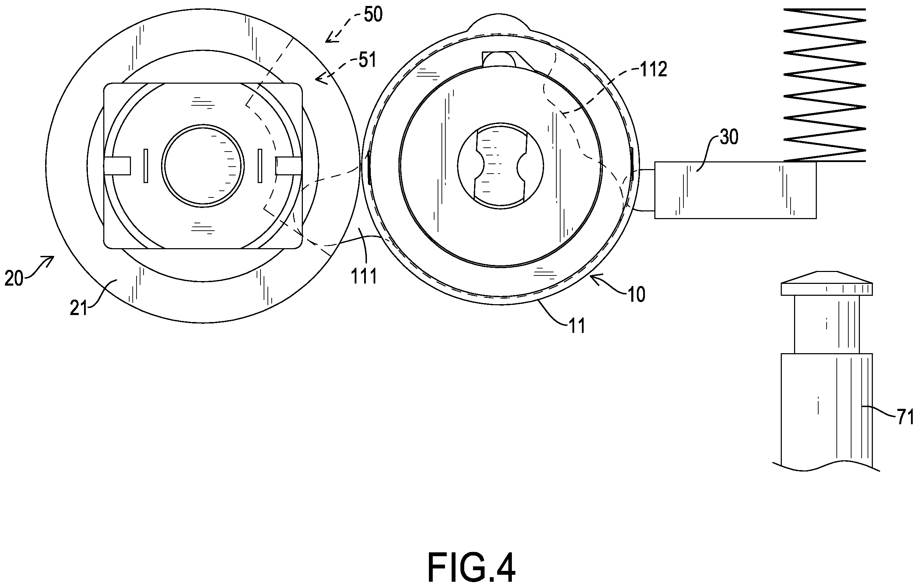

In addition, with reference to Figs. 4 to 6, the first output portion 11 has a free latching state. When in the free latching state, the first output portion 11 is moveable or rotatable. The electronic control compound lock further comprises a reset elastic unit 82, which drives the first output portion 11 to move or rotate toward a direction opposite to a direction toward which the first output portion 11 is moved or rotated to be unlocked, as shown in Fig. 2. In the first embodiment, the first output portion 11 in the free latching state is rotatable. The reset elastic unit 82 constantly rotates the first output portion 11 toward the direction in which the first output portion 11 cannot be unlocked. Furthermore, the reset elastic unit 82 has a storing force higher than a storing force of the unlocking elastic unit 81, which means the reset elastic unit 82 has a spring constant higher than a spring constant of the unlocking elastic unit 81. So, the first output portion 11 is constantly rotated toward the direction toward which it cannot be unlocked.

When being inserted, an inserting element 71 further pushes the first latch tongue 30, so the first latch tongue 30 forces the first output portion 11 to rotate toward the direction toward which the first output portion 11 can be unlocked. When the inserting element 71 is completely inserted to a presumed position, the first latch tongue 30 can be reset in position, so the reset elastic unit 82 pushes the first output portion 11 back to its original position, as shown in Figs. 4 to 6. Therefore, when the electronic control compound lock is locked, the inserting element 71 can still be inserted but cannot be pulled out after completely inserted. The inserting element 71 has to wait until one of the first and second lock cores 10, 20 is unlocked to be pulled out.

In the first embodiment, the first output portion 11 has to be rotated to a right angle or to be moved to a right position, so that the latch tongue recess 112 can correspond to the first latch tongue 30. And then, the first latch tongue 30 can be moved away from the position that it is locked to further unlock the electronic control compound lock. Therefore, even striking the electronic control compound lock for a number of times, the first output portion 11 is unlikely to be rotated to the right angle or be moved to the right position. Hence, the electronic control compound lock is hard to be picked or broken, thereby tremendously enhancing security of the lock.

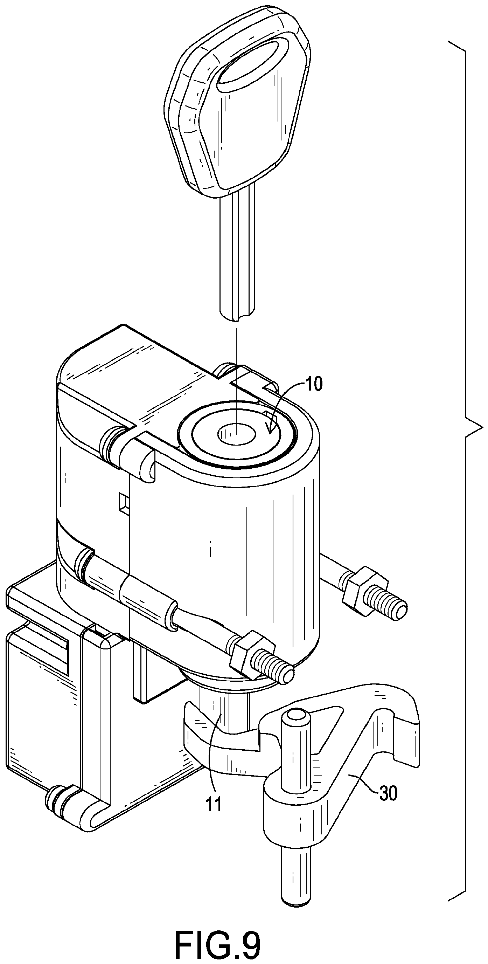

With reference to Figs. 9 to 14, the second embodiment is similar to the first embodiment. Yet, in the second embodiment, the first latch tongue 30 is rotatable, and the clutch structure 50 is connected between the first output portion 11 and the second output portion 21 to indirectly drive the first output portion 11 and the second output portion 21 with each other.

In the second embodiment, the clutch structure 50 comprises a first transmitting element 52 and a second transmitting element 53. The first transmitting element 52 is rotatably mounted around the first output portion 11. The elongated recess 51 is formed on the first transmitting element 52. The transmitting portion 111 of the first output portion 11 is in the elongated recess 51, as shown in Fig. 11. The second transmitting element 53 is connected to the second output portion 21, which is rotated with the second transmitting element 53. The first transmitting element 52 and the second transmitting element 53 are driven with each other. Preferably, the first transmitting element 52 and the second transmitting element 53 are both gears and are mesh with each other, therefore rotated with each other. However, a way of the first transmitting element 52 and the second transmitting element 53 driven with each other is not limited to gear meshing, as they can also be driven with each other through a belt, rope, etc.

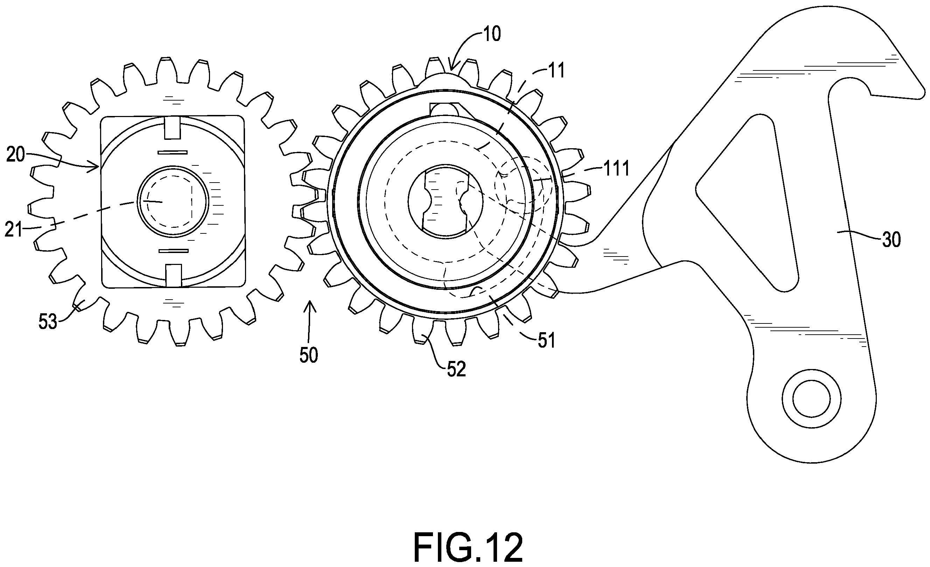

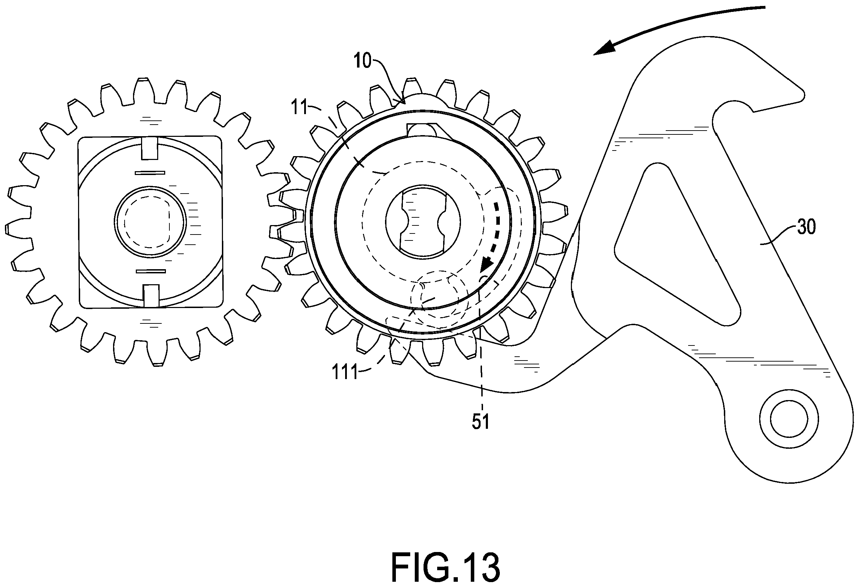

With reference to Figs. 12 and 13, when the first lock core 10 is unlocked, the first output portion 11 is rotated and drives the first latch tongue 30 to rotate and be unlocked. At the same time, the transmitting portion 111 on the first output portion 11 is moved curvedly inside the elongated recess 51 of the unmoved first transmitting element 52, and therefore the first transmitting element 52 is not driven.

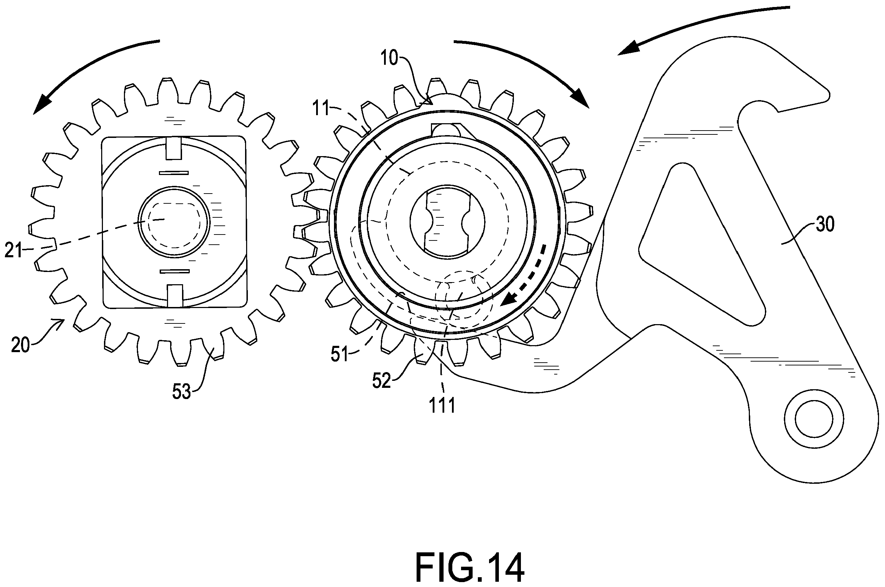

With reference to Figs. 12 and 14, when the second lock core 20 is unlocked, the second output portion 21 drives the second transmitting element 53, and thus further drives the first transmitting element 52. The first transmitting element 52 abuts and pushes the transmitting portion 111 through a wall at an end of the elongated recess 51 to rotate the first output portion 11. So, the first output portion 11 drives the first latch tongue 30 to rotate and be unlocked.

Therefore, when either of the lock cores 10, 20 is unlocked, the first output portion 11 drives the first latch tongue 30 to be unlocked, and the two lock cores 10, 20 will not interfere with each other.

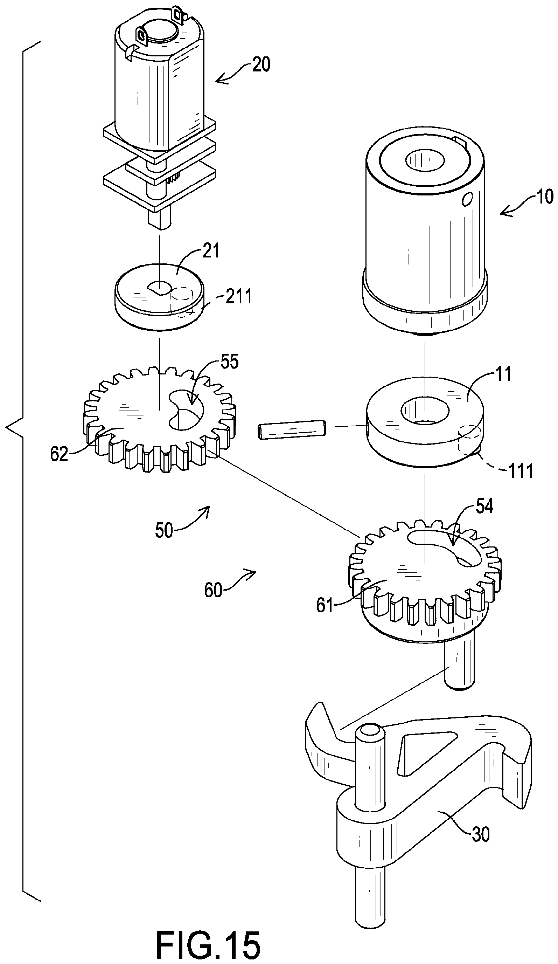

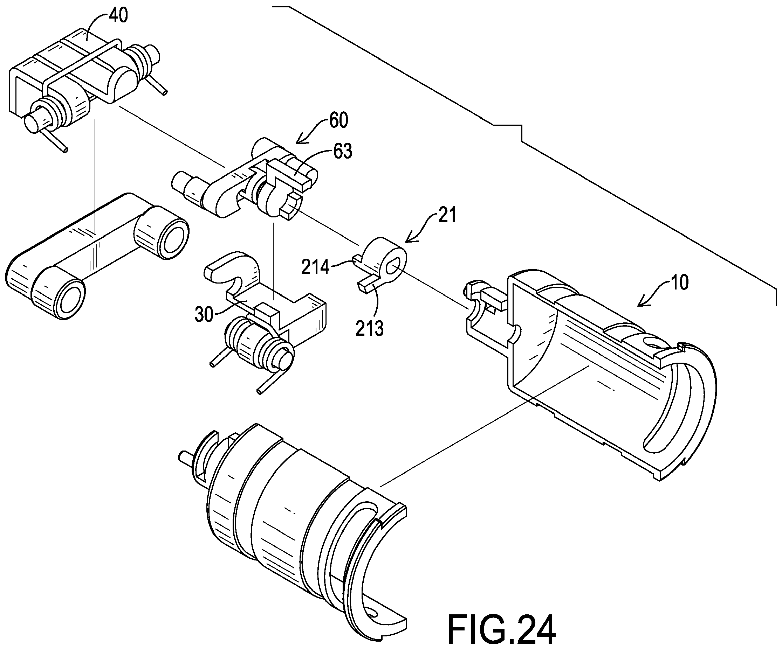

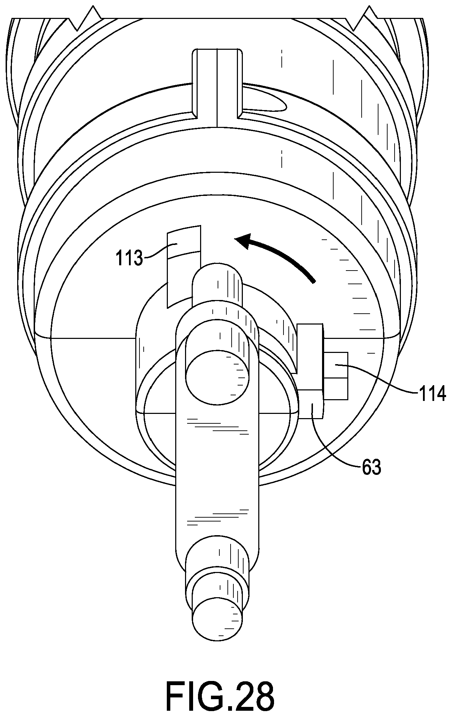

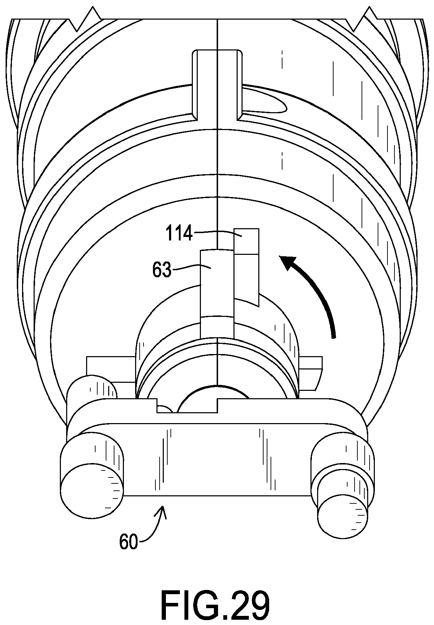

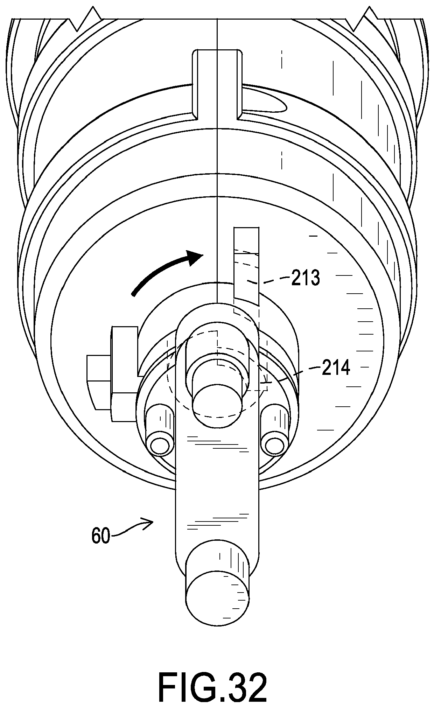

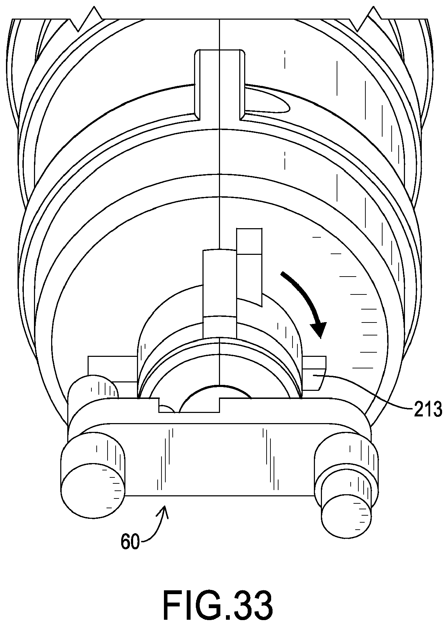

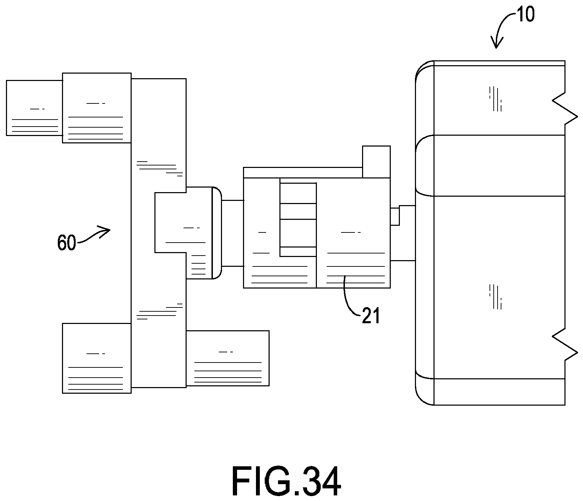

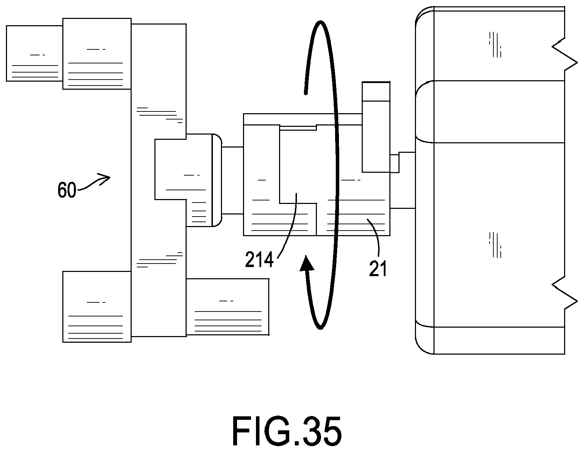

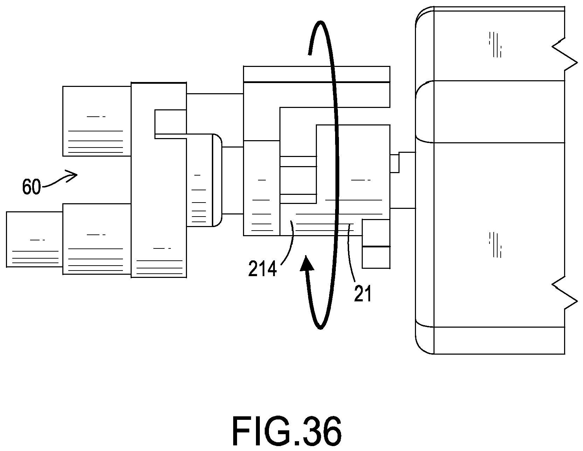

With reference to Figs. 15 to 39, in the third and fourth embodiments, and in the second configuration, the electronic control compound lock further comprises an output unit 60, which is connected to the first output portion 11 and the second output portion 21, and is connected to the first latch tongue 30, as shown in Fig. 15. When one of the first lock core 10 and the second lock core 20 is unlocked, the output portion corresponding to said lock core can unlock the first latch tongue 30 through the output unit 60.

In the second configuration, the electronic control compound lock may comprise the clutch structure 50 but the clutch structure 50 is mounted at the output unit 60. When one of the first output portion 11 and the second output portion 21 is driven, the clutch structure 50 prevents the other one of the first output portion 11 and the second output portion 21 from being driven to prevent their interference with each other. But the clutch structure 50 may be omitted.

Preferably, the clutch structure 50 comprises a first elongated slot 54 and a second elongated slot 55. In embodiments that the first and second output portions 11, 21 are movable, the first and second elongated slots 54, 55 are linear. In embodiments that the first and second output portions 11, 21 are rotatable, the first and second elongated slots 54, 55 are curved. However, shapes of the clutch structure 50 are not limited to that.

When the first output portion 11 is driven, the first output portion 11 drives the output unit 60 through a wall of the first elongated slot 54 to unlock the first latch tongue 30. During operation, the second output portion 21 and the second elongated slot 55 move relatively with each other.

When the second output portion 21 is driven, the second output portion 21 drives the output unit 60 through a wall of the second elongated slot 55 to unlock the first latch tongue 30. During operation, the first output portion 11 and the first elongated slot 54 move relatively with each other.

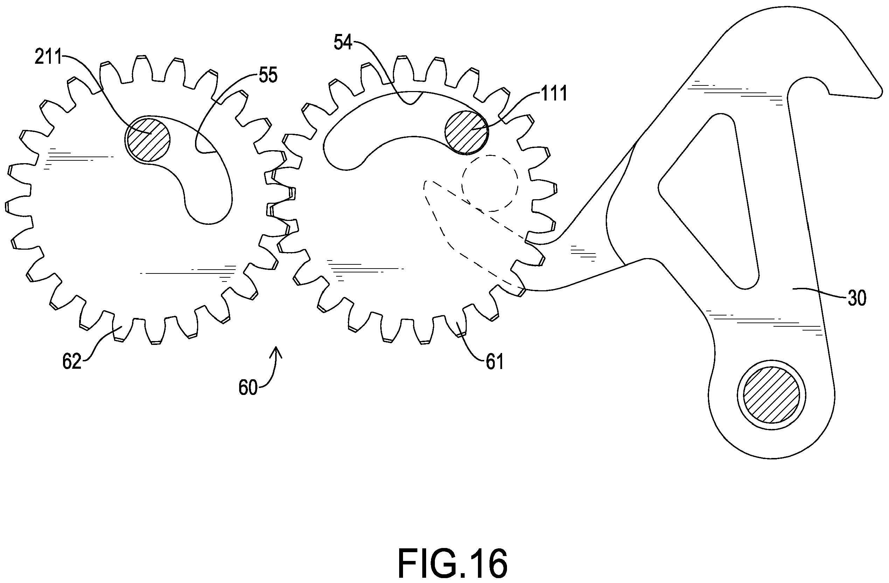

In the third embodiment, with reference to Figs. 15 and 16, the output unit 60 comprises a first outputting element 61 and a second outputting element 62, which are driven with each other. Preferably, the first outputting element 61 and the second outputting element 62 both are gears and mesh with each other to be driven with each other. However, how the first outputting element 61 and the second outputting element 62 are driven with each other is not limited to gear meshing, as they can also be driven with each other through a belt, rope, etc.

The first elongated slot 54 is disposed on the first outputting element 61. The transmitting portion 111 of the first output portion 11 is disposed in the first elongated slot 54. The second elongated slot 55 is disposed on the second outputting element 62. A transmitting portion 211 of the second output portion 21 is disposed in the second elongated slot 55. When being driven, the first outputting element 61 drives the first latch tongue 30 to move or rotate.

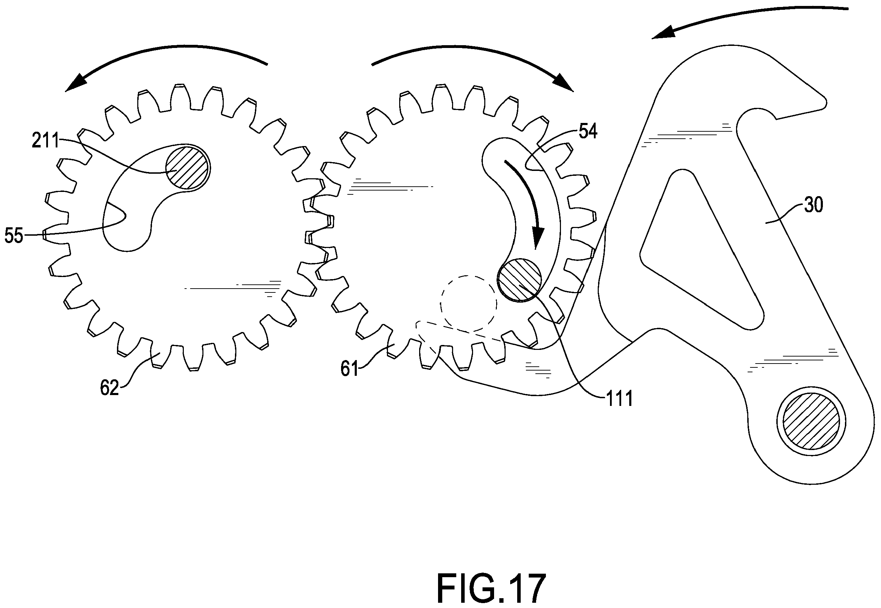

With reference to Figs. 16 and 17, when the first lock core 10 is unlocked, the first output portion 11 is rotated. The transmitting portion 111 of the first output portion 11 abuts and pushes a wall of an end of the first elongated slot 54 to drive the first outputting element 61 to rotate, thereby unlocking the first latch tongue 30. During operation, the second outputting element 62 is rotated, so the second elongated slot 55 is rotated around the second output portion 21, and therefore does not interfere with the second output portion 21.

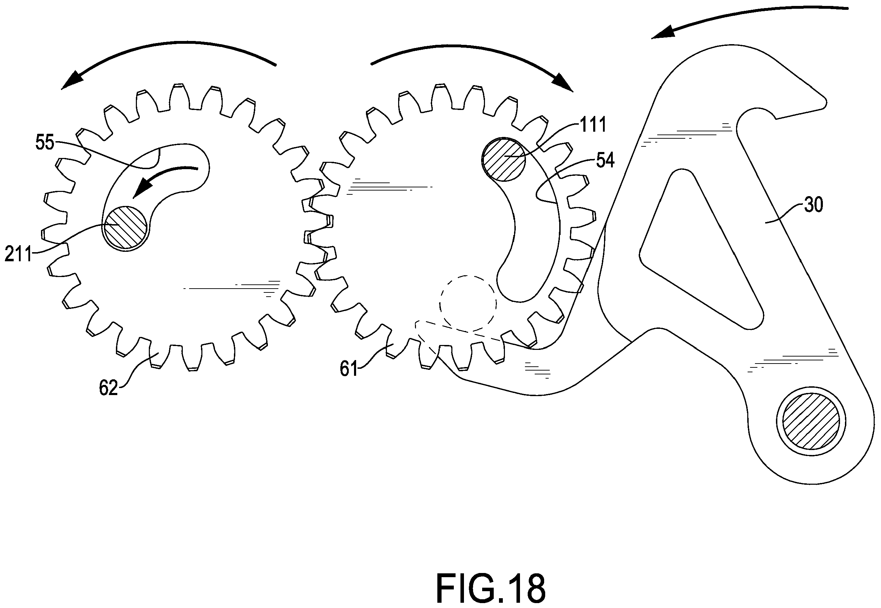

With reference to Figs. 16 and 18, when the second lock core 20 is unlocked, the second output portion 21 is rotated. The transmitting portion 211 of the second output portion 21 abuts and pushes a wall of an end of the second elongated slot 55 to drive the second outputting element 62 to rotate, thereby driving the first outputting element 61 to rotate and so to unlock the first latch tongue 30. During operation, the first outputting element 61 is rotated, so the first elongated slot 54 is rotated around the first output portion 11, and therefore does not interfere with the first output portion 11.

Therefore, when either of the lock cores 10, 20 is unlocked, the first latch tongue 30 is unlocked through the output unit 60, and the two lock cores 10, 20 do not interfere with each other.

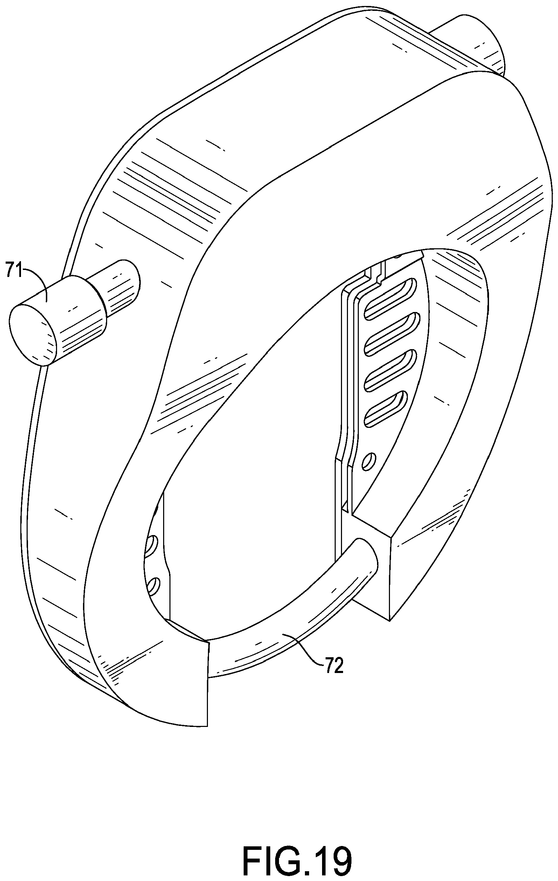

With reference to Figs. 19 to 39, differences between the fourth and third embodiments are that in the fourth embodiment, the first lock core 10 and the second lock core 20 are relatively rotatable and are mounted around each other, are mounted coaxially, and are arranged non-adjacent and non-laterally. Plus, the first output portion 11 and the second output portion 21 are relatively rotatable and mounted coaxially, and are arranged non-adjacent and non-laterally. In the fourth embodiment, the lock core unlocked mechanically is mounted around the lock core unlocked through electronic signals. But the embodiment is not limited to that, which means positions of the two lock cores can be exchanged.

When the first lock core 10 is unlocked, the first lock core 10 rotates the first output portion 11, which drives the output unit 60 to rotate. When the second lock core 20 is unlocked, the second lock core 20 rotates the second output portion 21, which drives the output unit 60 to rotate. When being driven, the output unit 60 might be rotated or be moved accordingly. Due to being spaced apart from each other, the first output portion 11 and the second output portion 21 drive the output unit 60 from different parts, and therefore the first output portion 11 and the second output portion 21 do not interfere with each other. Hence, the fourth embodiment can be viewed as having no clutch structure 50.

That the first output portion 11 and the second output portion 21 are spaced apart from each other means that the two output portions respectively abut different axial positions on the output unit 60. Therefore, the first output portion 11 and the second output portion 21 do not interfere with each other.

To be specific, the output unit 60 has an output-operate-portion 63 axially protruding from the output unit 60.

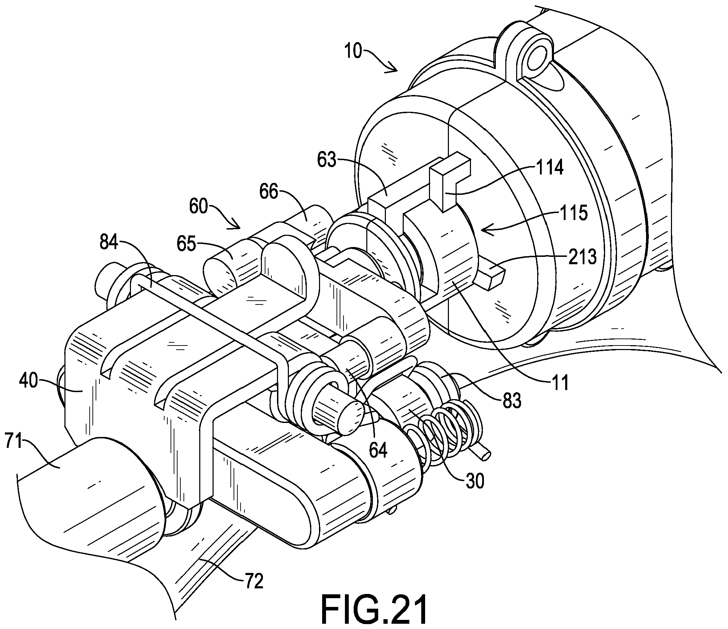

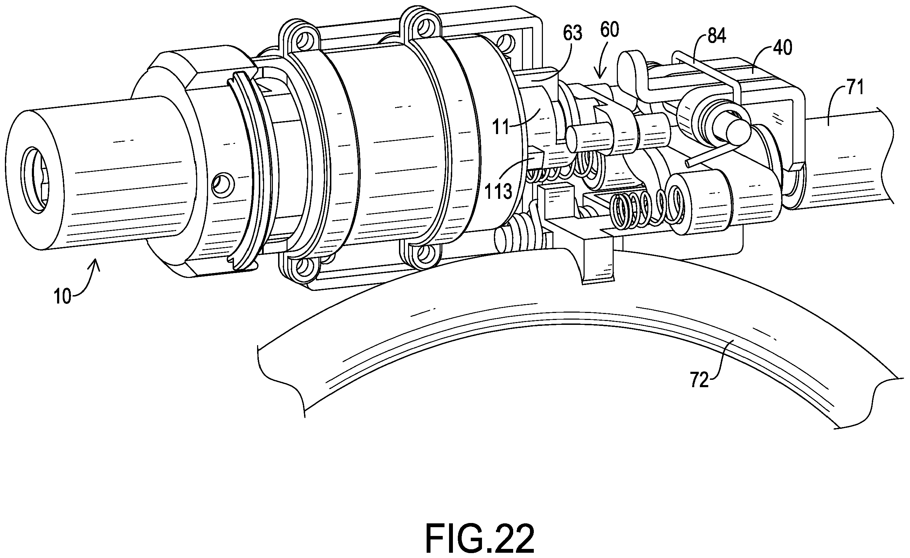

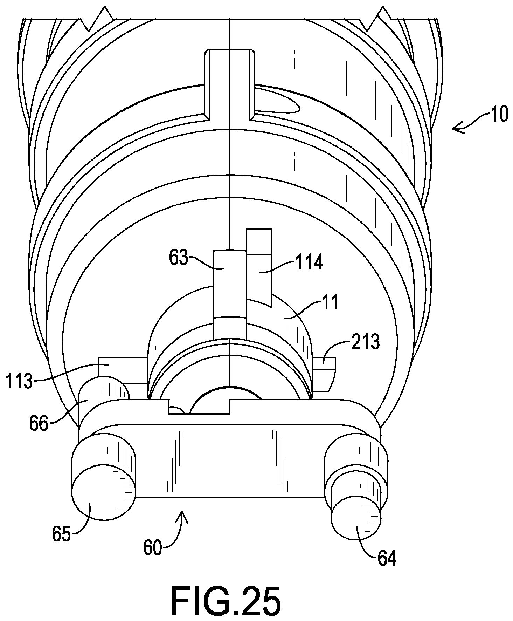

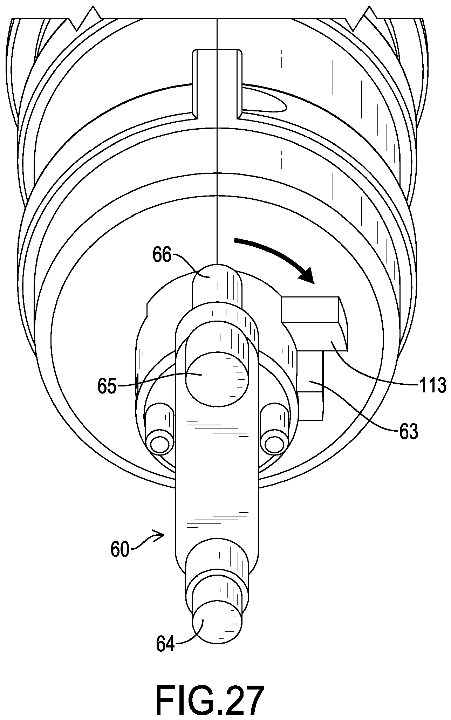

The first output portion 11 has a first-main-operate-portion 113 and a first-minor-operate-portion 114, both radially protruding from the first output portion 11. The output-operate-portion 63 is disposed between the first-main-operate-portion 113 and the first-minor-operate-portion 114, as shown in Figs. 21 and 22. When the first output portion 11 is rotated toward two opposite directions respectively, the first-main-operate-portion 113 and the first-minor-operate-portion 114 will respectively abut the output-operate-portion 63 to drive the output unit 60 to rotated toward two opposite directions respectively. In other words, when the first output portion 11 is rotated toward a direction, the first-main-operate-portion 113 selectively abuts the output-operate-portion 63 to drive the output unit 60 to rotate toward said direction, as shown in Figs. 25 to 27. When the first output portion 11 is rotated toward another direction, the first-minor-operate-portion 114 selectively abuts the output-operate-portion 63 to drive the output unit 60 to rotate toward said another direction, as shown in Figs. 27 to 29. The first-main-operate-portion 113 and the first-minor-operate-portion 114 respectively protrude from different angles yet at a same axial position on the first output portion 11. Therefore, the first-main-operate-portion 113 and the first-minor-operate-portion 114 abut the output-operate-portion 63 in a same axial position.

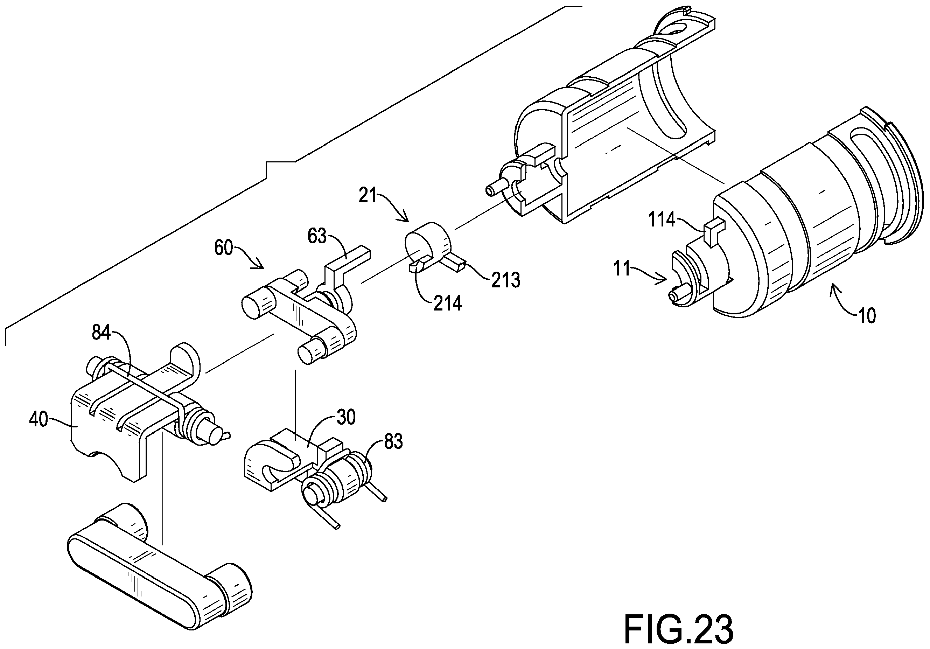

The second output portion 21 has a second-main-operate-portion 213 radially protruding from the second output portion 21. The second output portion 21 has a second-minor-operate-portion 214 protruding from the second output portion 21, preferably protruding axially. The second-main-operate-portion 213 and the second-minor-operate-portion 214 are disposed in different axial positions on the second output portion 21, as shown in Fig. 23. Therefore, the second-main-operate-portion 213 and the second-minor-operate-portion 214 abut different axial positions on the output unit 60. Preferably, the first output portion 11 is mounted around the second output portion 21 and has an elongated hole 115. The second-main-operate-portion 213 of the second output portion 21 passes through the elongated hole 115 and is moved in the elongated hole 115, as shown in Fig. 21. The elongated hole 115 can be viewed as a clutch structure.

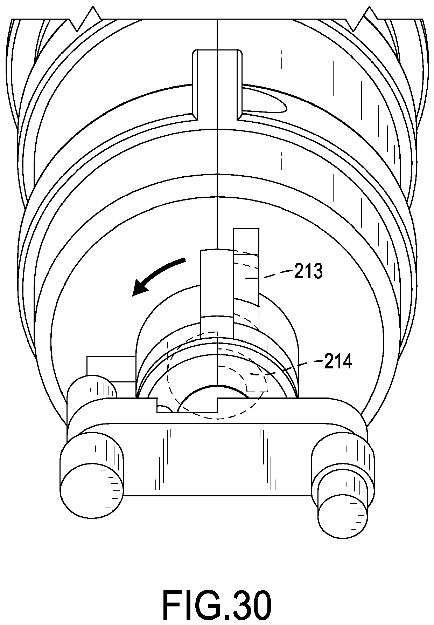

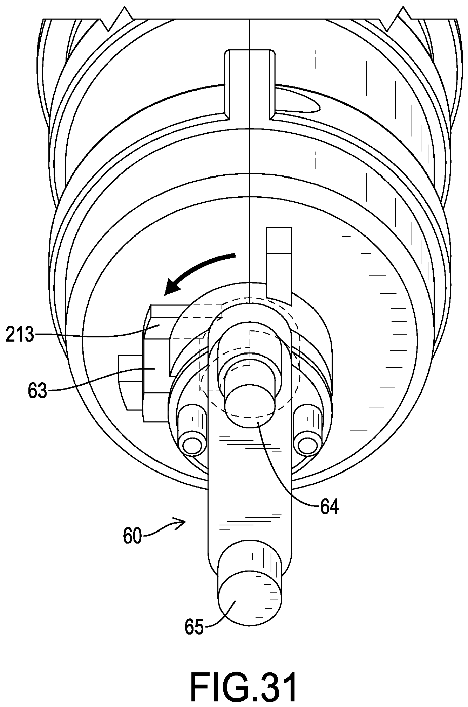

The second-main-operate-portion 213 and the first-main-operate-portion 113 abut different axial positions on the output-operate-portion 63, and therefore will not interfere with each other when being moved. When the second output portion 21 is rotated toward a direction, the second-main-operate-portion 213 selectively abuts the output-operate-portion 63 to drive the output unit 60 to rotate toward said direction, as shown in Figs. 30 and 31. When the second output portion 21 is rotated toward another direction, the second-minor-operate-portion 214 selectively abuts the output-operate-portion 63 to drive the output unit 60 to rotate toward said another direction, as shown in Figs. 31 to 33 and Figs. 34 to 36, which show views from different angles.

Therefore, the first output portion 11 and the second output portion 21 can respectively drive the output unit 60 to rotate toward two opposite directions respectively, without interfering with each other.

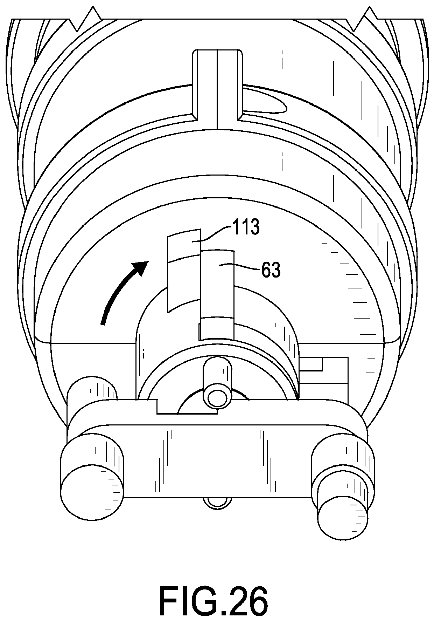

Preferably, when the first lock core 10 is unlocked, a direction, being clockwise as shown in Figs. 26 and 27, toward which the first output portion 11 rotates the output unit 60, is opposite to another direction, being counterclockwise as shown in Figs. 30 and 31, toward which the second output portion 21 rotates the output unit 60. However, the directions that the two output portions 11, 21 rotate the output unit 60 to be unlocked is not limited to be opposite and can be the same.

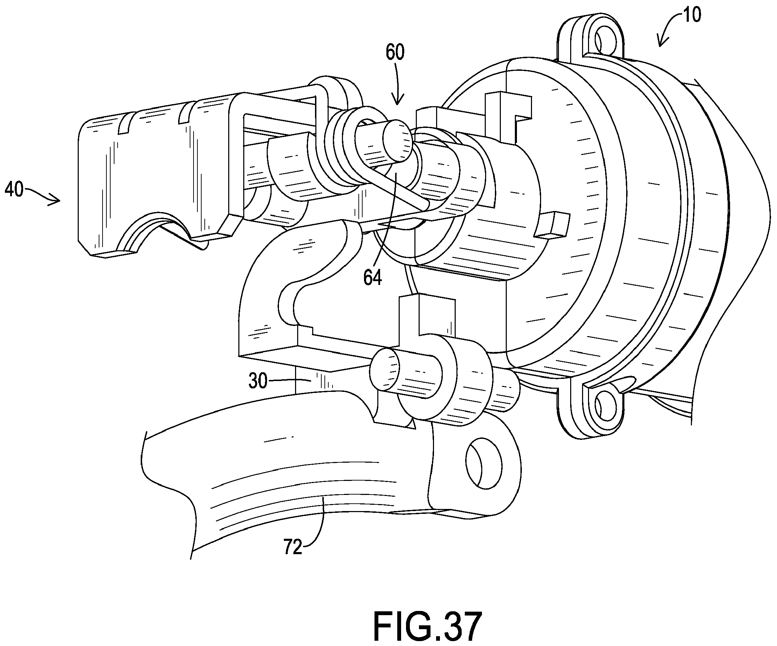

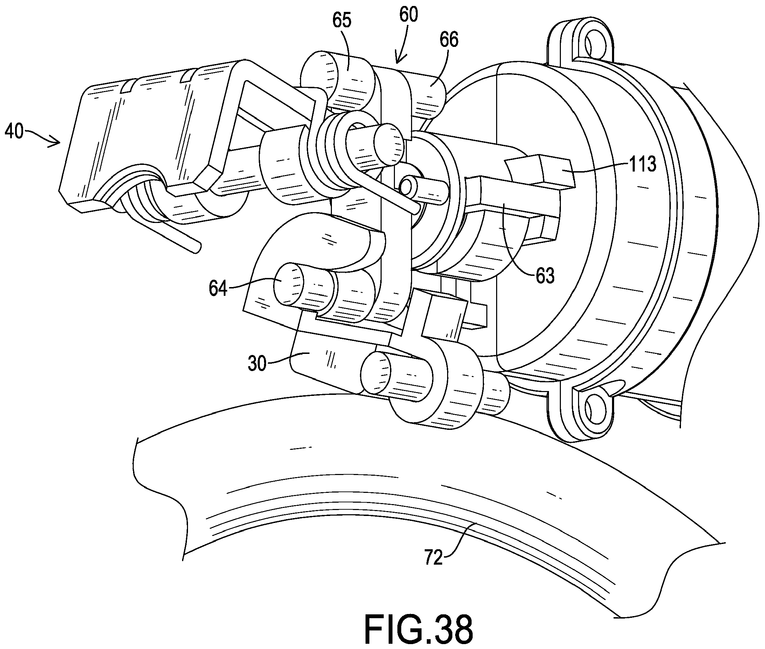

In the fourth embodiment, the electronic control compound lock further comprises the second latch tongue 40, which is movable or rotatable and is connected to the output unit 60. When one of the first lock core 10 and the second lock core 20 is unlocked, the corresponding output portion unlocks the first latch tongue 30 and the second latch tongue 40 simultaneously through the output unit 60, as shown in Figs. 37 and 38.

Besides, as mentioned above, rotating the first output portion 11 toward two opposite directions and rotating the second output portion 21 toward two opposite directions both can drive the output unit 60 to rotate toward two opposite directions respectively. Preferably, rotating the output unit 60 toward either of the two opposite directions can unlock the first latch tongue 30 and the second latch tongue 40. However, it is not limited to that. Which being said, it can be altered so that only rotating the output unit 60 toward one direction can unlock the first latch tongue 30 and the second latch tongue 40.

Rotating the output unit 60 toward either of two opposite directions can unlock the first latch tongue 30 and the second latch tongue 40. Accordingly and preferably, the output unit 60 has a first unlocking portion 64, a second unlocking portion 65, and a third unlocking portion 66. The first unlocking portion 64 is disposed at one end of the output unit 60, while the second unlocking portion 65 and the third unlocking portion 66 are disposed at another end of the output unit 60 and are at opposite sides in an axis.

With reference to Figs. 37 and 38, with Fig. 38 showing the electronic control compound lock in a state corresponding to the lock in the same state as shown in Fig. 27, when the first output portion 11 rotates the output unit 60 toward a direction, the first unlocking portion 64 is rotated to press the first latch tongue 30 upwardly. So, the first latch tongue 30 is rotated to be detached from an arch bolt 72 of a horseshoe lock, while originally the first latch tongue 30 is pushed to abut the arch bolt 72 by a first reset elastic unit 83. At the same time, the second unlocking portion 65 is rotated upwardly until it pushes down at the second latch tongue 40, so the second latch tongue 40 is rotated to be detached from an inserting element 71, while originally the second latch tongue 40 is pushed to abut the inserting element 71 by a second reset elastic unit 84.

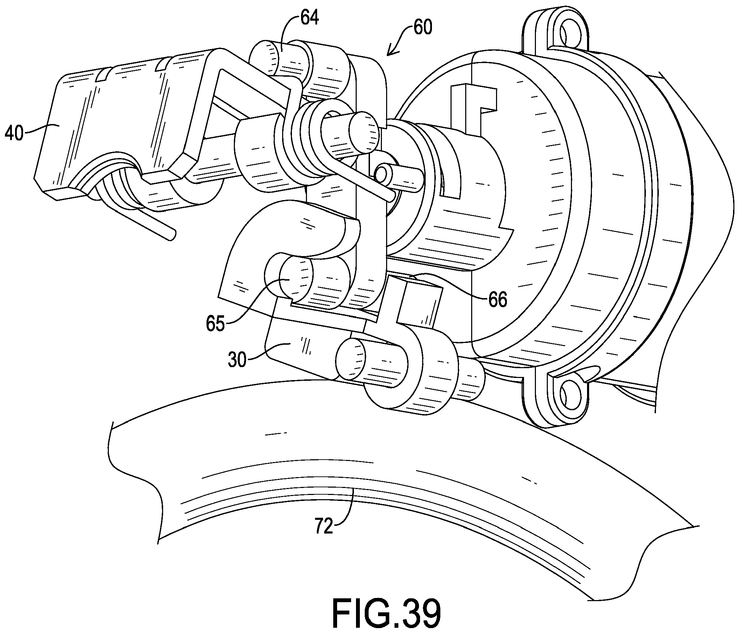

With reference to Figs. 37 and 39, with Fig. 39 showing the electronic control compound lock in a state corresponding to the lock in the same state as shown in Fig. 31, when the second output portion 21 rotates the output unit 60 toward another direction, the first unlocking portion 64 is rotated upwardly until pushes down at the first latch tongue 30. So, the first latch tongue 30 is rotated to be detached from an inserting element 71. At the same time, the third unlocking portion 66 pushes the second latch tongue 40 down, so that the second latch tongue 40 is rotated to be detached from the arch bolt 72 of the horseshoe lock.

Therefore, when either of the two lock cores 10, 20 is unlocked, it can unlock the first latch tongue 30 and the second latch tongue 40 through the output unit 60, without the two lock cores 10, 20 interfering with each other.

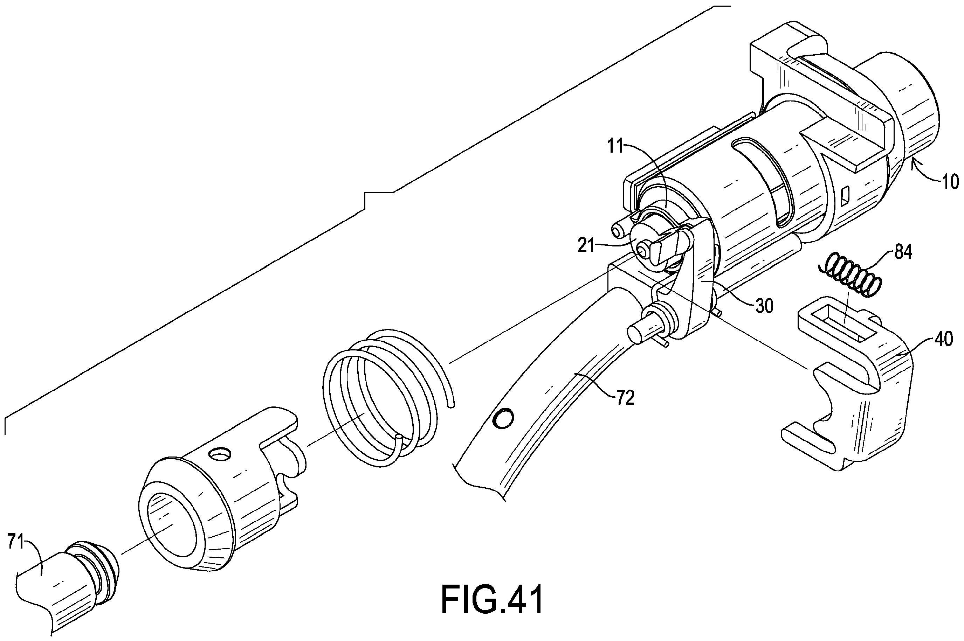

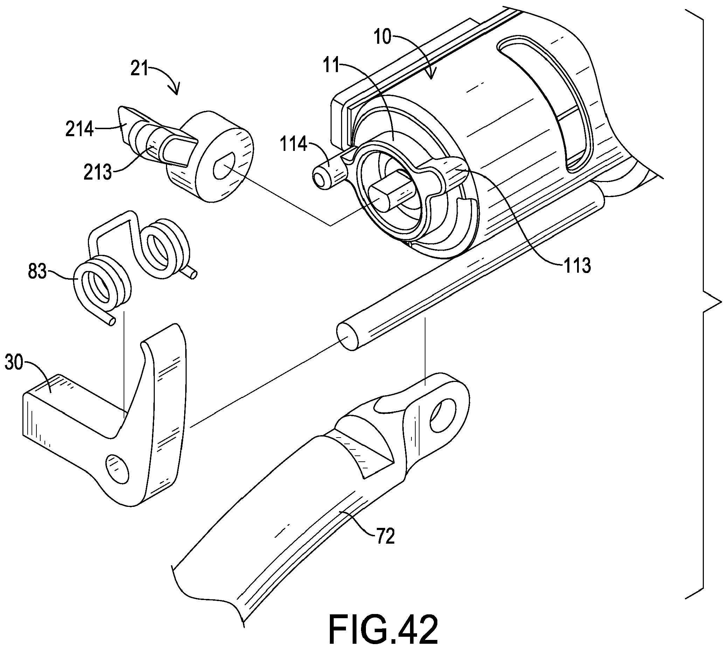

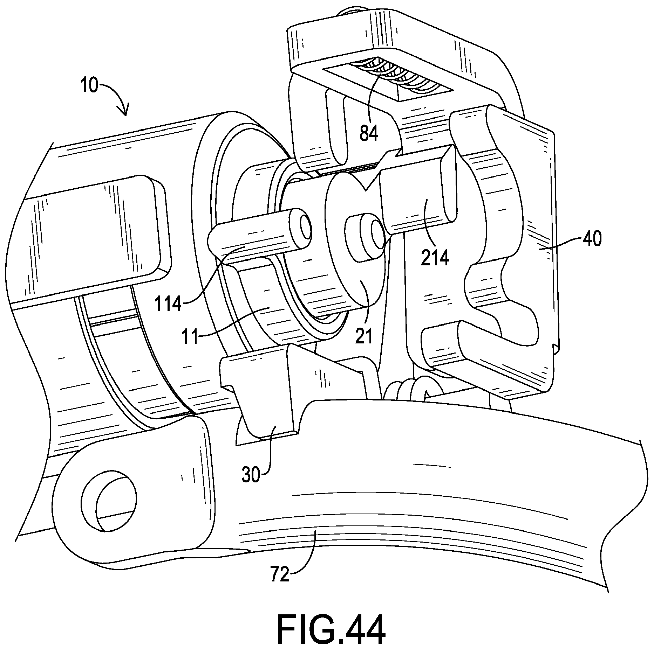

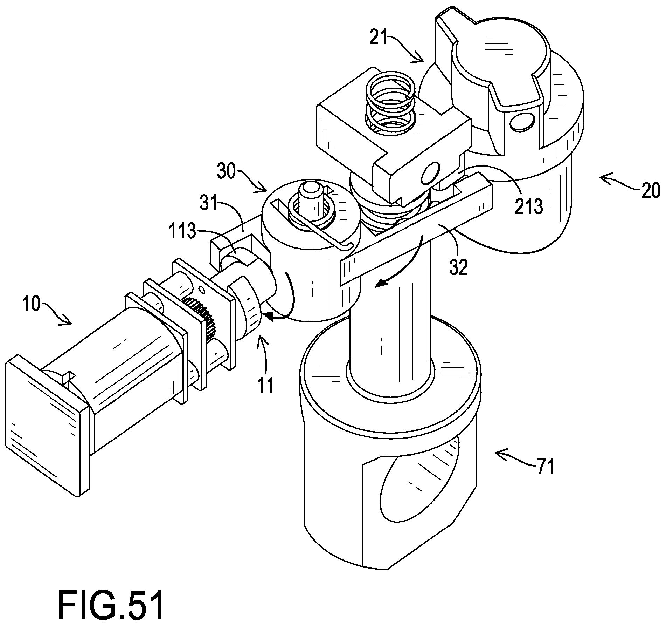

With reference to Figs. 40 to 53, in the fifth and the sixth embodiments, in the third configuration, there is no output unit 60, and the two lock cores 10, 20 are respectively connected to the latch tongue and can unlock the latch tongue. Specifically, the first output portion 11 and the second output portion 21 are respectively driven with the first latch tongue 30. Preferably, the first output portion 11 and the second output portion 21 are not driven together. When one of the first lock core 10 and the second lock core 20 is unlocked, the corresponding output portion unlocks the first latch tongue 30.

Furthermore, in the fifth embodiment, the electronic control compound lock further comprises the second latch tongue 40. The first output portion 11 and the second output portion 21 are respectively connected to the second latch tongue 40. When one of the first lock core 10 and the second lock core 20 is unlocked, the corresponding output portion unlocks the first latch tongue 30 and the second latch tongue 40 at the same time.

Preferably, the first output portion 11 and the second output portion 21 are moved along a same moving direction or are rotated toward a same direction to unlock the first latch tongue 30 and the second latch tongue 40.

With reference to Figs. 40 to 48, in the fifth embodiment, when unlocked, the first lock core 10 rotates the first output portion 11, which is rotated to unlock the first latch tongue 30 and the second latch tongue 40. When unlocked, the second lock core 20 rotates the second output portion 21, which is rotated to unlock the first latch tongue 30 and the second latch tongue 40. The first output portion 11 and the second output portion 21 are mounted coaxially and are rotatable relative to each other.

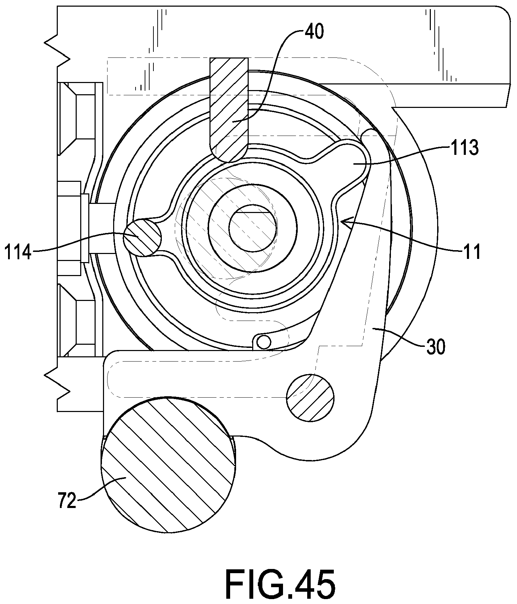

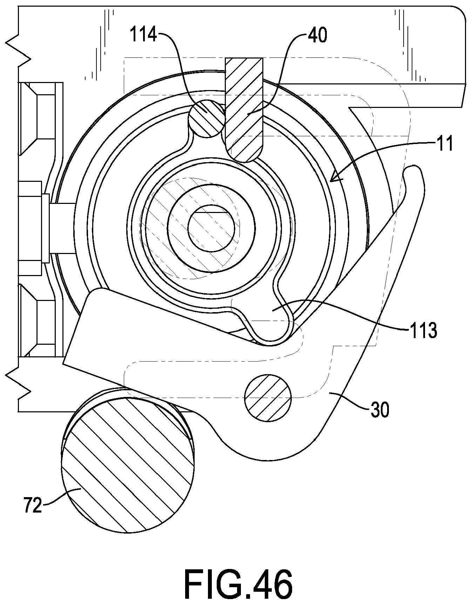

Preferably, the first output portion 11 has a first-main-operate-portion 113 radially protruding from the first output portion 11. The first output portion 11 has a first-minor-operate-portion 114 protruding from the first output portion 11, preferably protruding axially. When the first output portion 11 is rotated, the first-main-operate-portion 113 selectively abuts the first latch tongue 30 to drive the first latch tongue 30, and the first-minor-operate-portion 114 selectively abuts the second latch tongue 40 to drive the second latch tongue 40. Specifically, with reference to Figs. 45 and 46, the first-main-operate-portion 113 is rotated to abut the first latch tongue 30 to detach the first latch tongue 30 from an arch bolt 72 of a horseshoe lock. Originally, the first latch tongue 30 is pushed toward the arch bolt 72 by a first reset elastic unit 83. The first-minor-operate-portion 114 is rotated until laterally pushing the second latch tongue 40 away to be detached from an inserting element 71. Originally, the second latch tongue 40 is pushed toward the inserting element 71 by a second reset elastic unit 84.

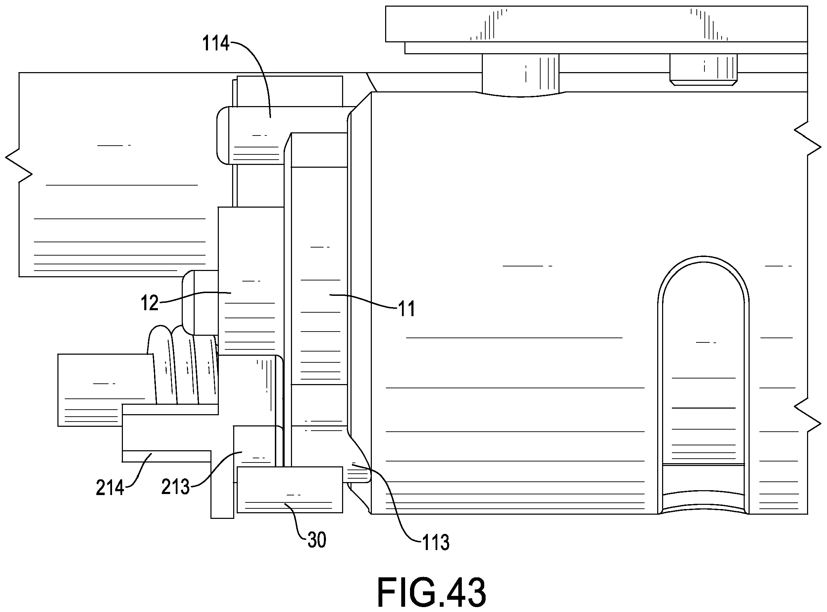

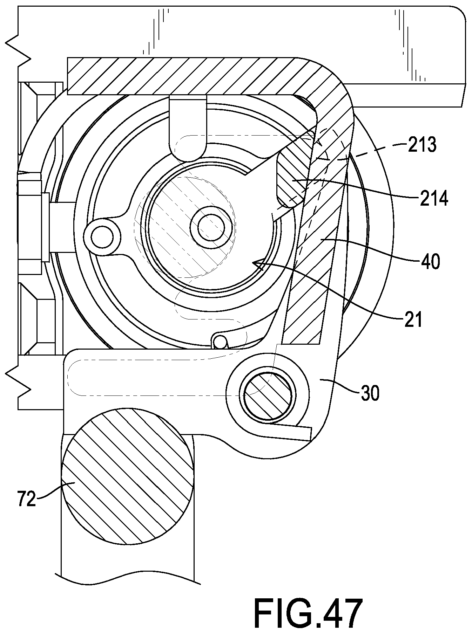

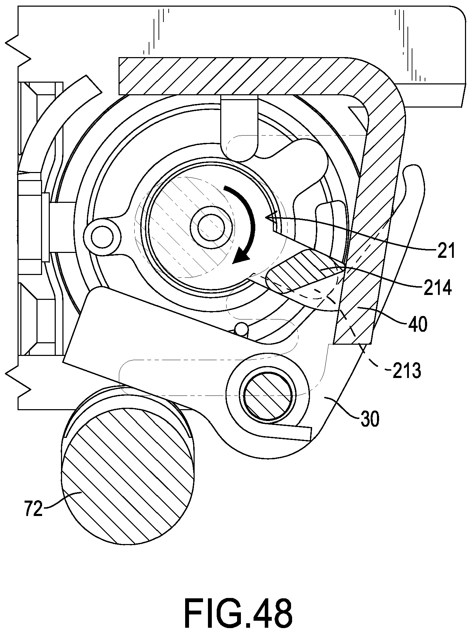

The second output portion 21 has a second-main-operate-portion 213 radially protruding from the second output portion 21 and has a second-minor-operate-portion 214 protruding from the second output portion 21. Preferably, the second-main-operate-portion 213 and the second-minor-operate-portion 214 are disposed at the same position but protrude toward two axially-opposite directions. Besides, the second-main-operate-portion 213 is adjacent to the first-main-operate-portion 113. The two main-operate-portions 113, 213 respectively abut two different axial positions on the first latch tongue 30, as shown in Fig. 43, and hence do not interfere with each other. When the second output portion 21 is rotated, the second-main-operate-portion 213 selectively abuts the first latch tongue 30 to drive the first latch tongue 30, and the second-minor-operate-portion 214 selectively abuts the second latch tongue 40 to drive the second latch tongue 40. To be more specific, with reference to Figs. 47 and 48, the second-main-operate-portion 213 is rotated until abutting and pushing the first latch tongue 30 to rotate and detach from the arch bolt 72 of the horseshoe lock. The second-minor-operate-portion 214 is rotated until laterally pushing the second latch tongue 40 away to be detached from the inserting element 71.

Therefore, when either of the two lock cores 10, 20 is unlocked, the unlocked lock core can independently unlock the first latch tongue 30 and the second latch tongue 40, and the two lock cores 10, 20 will not interfere with each other.

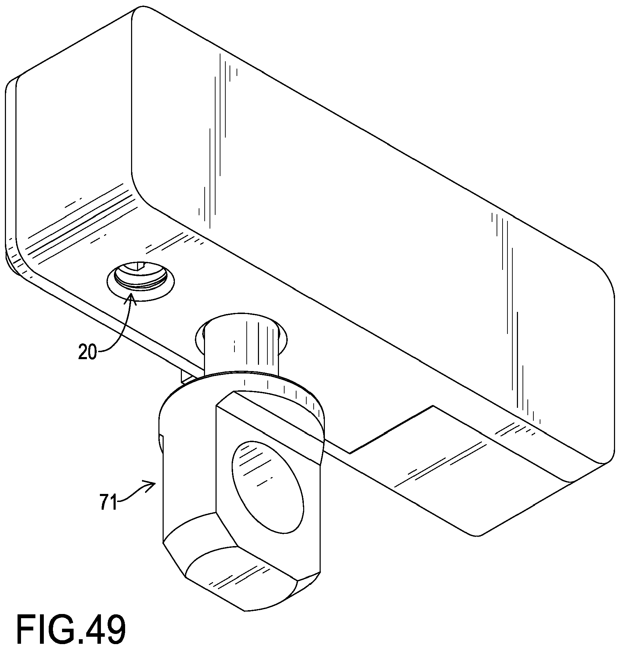

With reference to Figs. 49 to 53, in the sixth embodiment, the two lock cores 10, 20 are not mounted around each other. Preferably, the first lock core 10 rotates the first output portion 11 toward a direction, which is different from a direction toward which the second lock core 20 rotates the second output portion 21. The two lock cores 10, 20 are disposed at two opposite sides of the first latch tongue 30, but the embodiment is not limited to that.

The first output portion 11 has a first-main-operate-portion 113 radially protruding from the first output portion 11. The second output portion 21 has a second-main-operate-portion 213 radially protruding from the second output portion 21. The first latch tongue 30 has a first core operating portion 31 and a second core operating portion 32, both radially protruding from the latch tongue 30. The two core operating portions 31, 32 preferably extend along opposite directions. The second core operating portion 32 is configured to fix an inserting element 71.

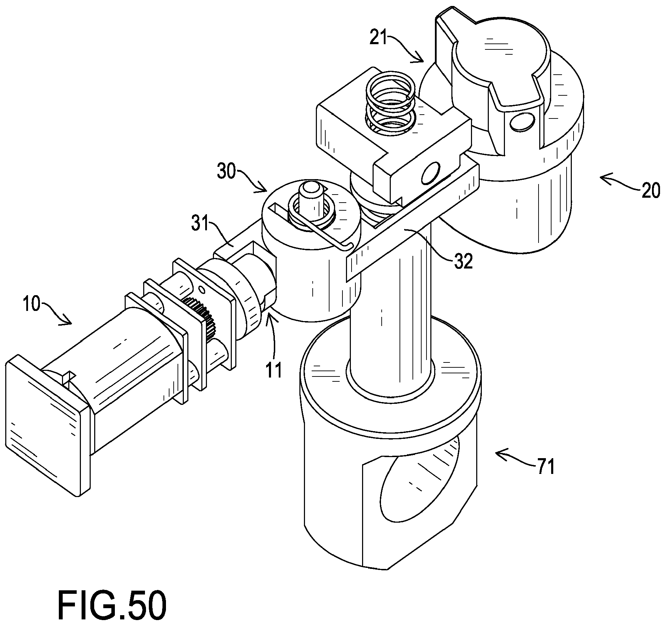

With reference to Figs. 50 to 51, when the first lock core 10 is unlocked, the first output portion 11 is rotatable. The first output portion 11 is rotated to rotate and unlock the first latch tongue 30. Preferably, the first-main-operate-portion 113 pushes the first core operating portion 31 to rotate the first latch tongue 30. At the same time, the second core operating portion 32 is detached from the inserting element 71, and is moved away from the second output portion 21.

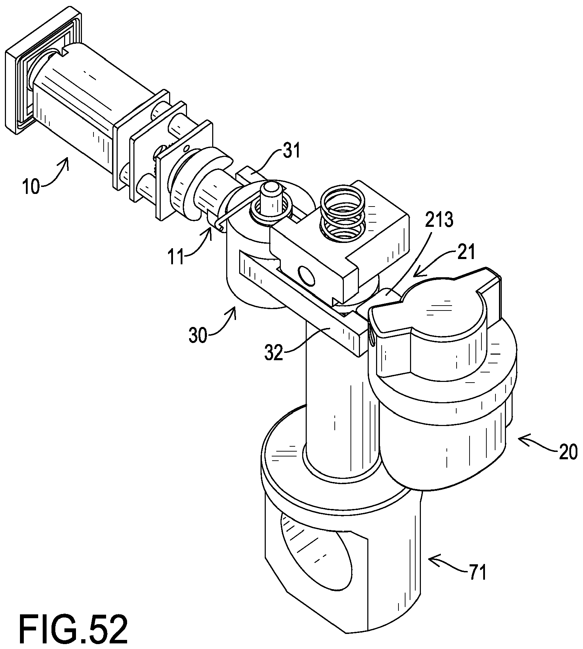

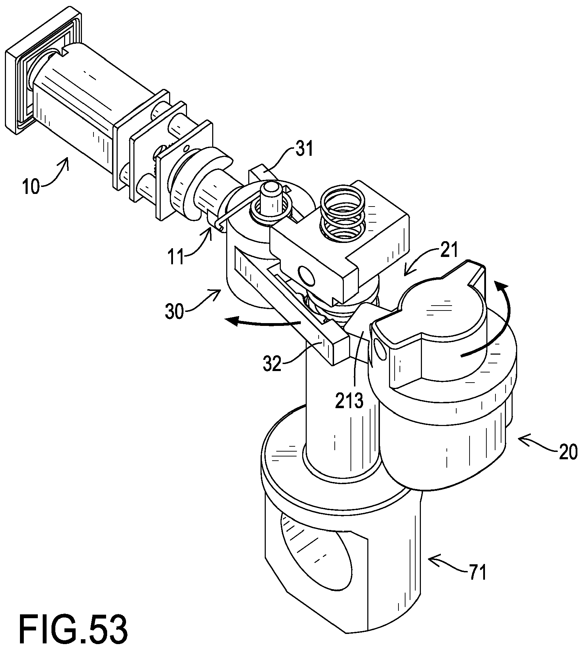

With reference to Figs. 52 and 53, when the second lock core 20 is unlocked, the second output portion 21 is rotatable. The second output portion 21 is rotated to rotate and unlock the first latch tongue 30. Preferably, the second-main-operate-portion 213 pushes the second core operating portion 32 to rotate the first latch tongue 30. At the same time, the second core operating portion 32 is detached from the inserting element 71, and the first core operating portion 31 is moved away from the first output portion 11 simultaneously.

The first output portion 11 and the second output portion 21 rotate the first latch tongue 30 toward a same direction to be unlocked.

Therefore, when one of the two lock cores 10, 20 is unlocked, the unlocked lock core can independently drive the first latch tongue 30 and the second latch tongue 40 to unlock, and the two lock cores 10, 20 do not interfere with each other.

Additionally, in the three configurations and the six embodiments, the electronic control compound lock can further comprise a first inner sensor unit, a first outer sensor unit, a second inner sensor unit, and a second outer sensor unit. The first inner sensor unit can be mounted at the first output portion 11 or the first latch tongue 30. The first inner sensor unit selectively senses the first outer sensor unit mutually to determine whether the first output portion 11 or the first latch tongue 30 is driven to move or rotate to a specific position. The second inner sensor unit can be mounted at the second output portion 21 or the second latch tongue 40. The second inner sensor unit selectively senses the second outer sensor unit mutually to determine whether the second output portion 21 or the second latch tongue 40 is driven to move or rotate to a specific position.

The first inner sensor unit and the second inner sensor unit are preferably magnets. The first outer sensor unit and the second outer sensor unit are preferably Hall sensors. However, it is not limited to that, the inner sensor units can be Hall sensors and the outer sensor units can be magnets.

Even though numerous characteristics and advantages of the present invention have been set forth in the foregoing description, together with details of the structure and features of the invention, the disclosure is illustrative only. Changes may be made in the details, especially in matters of shape, size, and arrangement of parts within the principles of the invention to the full extent indicated by the broad general meaning of the terms in which the appended claims are expressed.

## Claims

1. An electronic control compound lock, and **characterized in that** the electronic control compound lock comprises:
a first lock core (10) having
a first output portion (11) being driven when the first lock core (10) is unlocked;
a second lock core (20) having
a second output portion (21) being driven when the second lock core (20) is unlocked;
one of the first lock core (10) and the second lock core (20) unlocked through electronic signals, the other one of the first lock core (10) and the second lock core (20) unlocked mechanically;
a first latch tongue (30) being movable or rotatable; and
wherein the first output portion (11) and the second output portion (21) are driven together; the first output portion (11) is driven with the first latch tongue (30); when one of the first lock core (10) and the second lock core (20) is unlocked, the first output portion (11) unlocks the first latch tongue (30).

2. The electronic control compound lock as claimed in claim 1, wherein
the electronic control compound lock further comprises
a clutch structure (50) mounted between the first output portion (11) and the second output portion (21); and
when the first output portion (11) is driven, the clutch structure (50) prevents the second output portion (21) from being driven.

3. The electronic control compound lock as claimed in claim 2, wherein
the clutch structure (50) has
an elongated recess (51);
when the first output portion (11) is driven, the first output portion (11) moves in the elongated recess (51); and
when the second output portion (21) is driven, the second output portion (21) drives the first output portion (11) through a wall of the elongated recess (51).

4. The electronic control compound lock as claimed in any one of claims 1 to 3, wherein
the electronic control compound lock further comprises
an unlocking elastic unit (81) facilitating the first latch tongue (30) to move or rotate toward the first output portion (11);
the first output portion (11) has a free latching state; when in the free latching state, the first output portion (11) is movable or rotatable;
the electronic control compound lock further comprises
a reset elastic unit (82) driving the first output portion (11) to move or rotate toward a direction opposite to a direction toward which the first output portion (11) is moved or rotated to be unlocked.

5. An electronic control compound lock comprising:
a first lock core (10) having
a first output portion (11) being driven when the first lock core (10) is unlocked;
a second lock core (20) having
a second output portion (21) being driven when the second lock core (20) is unlocked;
one of the first lock core (10) and the second lock core (20) unlocked through electronic signals, the other one of the first lock core (10) and the second lock core (20) unlocked mechanically;
an output unit (60) connected to the first output portion (11) and the second output portion (21);
a first latch tongue (30) being movable or rotatable and connected to the output unit (60); and
wherein when one of the first lock core (10) and the second lock core (20) is unlocked, the first output portion (11) and the second output portion (21) unlock the first latch tongue (30) through the output unit (60).

6. The electronic control compound lock as claimed in claim 5, wherein
the electronic control compound lock further comprises
a clutch structure (50) mounted at the output unit (60); and
when one of the first output portion (11) and the second output portion (21) is driven, the clutch structure (50) prevents the other one of the first output portion (11) and the second output portion (21) from being driven.

7. The electronic control compound lock as claimed in claim 6, wherein
the clutch structure (50) has
a first elongated slot (54);
a second elongated slot (55);
when the first output portion (11) is driven and drives the output unit (60) through a wall of the first elongated slot (54) to unlock the first latch tongue (30), the second output portion (21) and the second elongated slot (55) move relatively; and
when the second output portion (21) is driven and drives the output unit (60) through a wall of the second elongated slot (55) to unlock the first latch tongue (30), the first output portion (11) and the first elongated slot (54) move relatively.

8. The electronic control compound lock as claimed in claim 5, wherein when the first lock core (10) is unlocked, the first output portion (11) is rotatable, and the first output portion (11) is rotated to drive the output unit (60);
when the second lock core (20) is unlocked, the second output portion (21) is rotatable, and the second output portion (21) is rotated to drive the output unit (60); and
the first output portion (11) and the second output portion (21) are mounted around each other and are rotatable with each other.

9. The electronic control compound lock as claimed in claim 8, wherein rotating the first output portion (11) toward two opposite directions drives the output unit (60) to rotate toward two opposite directions respectively;
rotating the second output portion (21) toward two opposite directions drives the output unit (60) to rotate toward two opposite directions respectively;
the output unit (60) has
an output-operate-portion (63) axially protruding from the output unit (60);
the first output portion (11) has
a first-main-operate-portion (113) radially protruding from the first output portion (11); when the first output portion (11) is rotated, the first-main-operate-portion (113) selectively abuts the output-operate-portion (63) to drive the output unit (60) to rotate;
the second output portion (21) has
a second-main-operate-portion (213) radially protruding from the second output portion (21); when the second output portion (21) is rotated, the second-main-operate-portion (213) selectively abuts the output-operate-portion (63) to drive the output unit (60) to rotate; and
the first-main-operate-portion (113) and the second-main-operate-portion (213) respectively abut two different axial positions on the output-operate-portion (63).

10. The electronic control compound lock as claimed in claim 5, wherein
the electronic control compound lock further comprises
a second latch tongue (40) being movable or rotatable, and connected to the output unit (60); and
when one of the first lock core (10) and the second lock core (20) is unlocked, the first output portion (11) and the second output portion (21) unlock the second latch tongue (40) through the output unit (60).

11. An electronic control compound lock comprising:
a first lock core (10) having
a first output portion (11) being driven when the first lock core (10) is unlocked;
a second lock core (20) having
a second output portion (21) being driven when the second lock core (20) is unlocked;
one of the first lock core (10) and the second lock core (20) unlocked through electronic signals, the other one of the first lock core (10) and the second lock core (20) unlocked mechanically;
a first latch tongue (30) being movable or rotatable; the first output portion (11) and the second output portion (21) respectively driven with the first latch tongue (30); and
wherein when one of the first lock core (10) and the second lock core (20) is unlocked, the first output portion (11) and the second output portion (21) unlock the first latch tongue (30).

12. The electronic control compound lock as claimed in claim 11, wherein the first output portion (11) and the second output portion (21) are moved along a same moving direction or are rotated toward a same direction to unlock the first latch tongue (30).

13. The electronic control compound lock as claimed in claims 11 or 12, wherein
when the first lock core (10) is unlocked, the first output portion (11) is rotatable, and the first output portion (11) is rotated to unlock the first latch tongue (30);
when the second lock core (20) is unlocked, the second output portion (21) is rotatable, and the second output portion (21) is rotated to unlock the first latch tongue (30); and
the first output portion (11) and the second output portion (21) are mounted around with each other and are rotatable with each other;
the first output portion (11) has
a first-main-operate-portion (113) radially protruding from the first output portion (11); when the first output portion (11) is rotated, the first-main-operate-portion (113) selectively abuts the first latch tongue (30) to drive the first latch tongue (30);
the second output portion (21) has
a second-main-operate-portion (213) radially protruding from the second output portion (21); when the second output portion (21) is rotated, the second-main-operate-portion (213) selectively abuts the first latch tongue (30) to drive the first latch tongue (30); and
the first-main-operate-portion (113) and the second-main-operate-portion (213) respectively abut two different axial positions on the first latch tongue (30).

14. The electronic control compound lock as claimed in claim 11, wherein
the electronic control compound lock further comprises
a second latch tongue (40) being movable or rotatable;
the first output portion (11) and the second output portion (21) are respectively driven with the second latch tongue (40); and
when one of the first lock core (10) and the second lock core (20) is unlocked, the first output portion (11) and the second output portion (21) unlock the second latch tongue (40).

15. The electronic control compound lock as claimed in claim 11, wherein when the first lock core (10) is unlocked, the first output portion (11) is rotatable; the first output portion (11) is rotated to rotate and unlock the first latch tongue (30);
when the second lock core (20) is unlocked, the second output portion (21) is rotatable; the second output portion (21) is rotated to rotate and unlock the first latch tongue (30); and
the first output portion (11) and the second output portion (21) rotate the first latch tongue (30) toward a same direction to be unlocked.
